# EUROPEAN PATENT SPECIFICATION

(11) **EP 4 518 209 B1**
(45) Date of publication and mention of the grant of the patent: **02.09.2026**
(21) Application number: 23806784.7
(22) Date of filing: 10.05.2023
(51) Int. Cl.: H04L 69/04, H04L 1/1822, H04L 1/1829, H04L 1/1867, H04W 28/06, H04W 28/14

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 17.05.2022 CN 202210538050; 13.07.2022 CN 202210827300
(43) Date of publication of application: 05.03.2025
(73) Proprietor: Huawei Technologies Co., Ltd., Shenzhen, Guangdong 518129 (CN)
(72) Inventor: ZHANG, Yanqing, Shenzhen, Guangdong 518129 (CN); YAO, Chuting, Shenzhen, Guangdong 518129 (CN); LI, Xueru, Shenzhen, Guangdong 518129 (CN)
(74) Representative: Gill Jennings & Every LLP
(86) International application number: PCT/CN2023/093204
(87) International publication number: WO 2023/221832

(56) References cited:
- WO-A1-2021/023044
- CN-A- 107 094 142
- CN-A- 111 510 419
- CN-A- 112 218 390
- CN-A- 112 333 769
- US-A1- 2020 169 914
- US-A1- 2021 360 089
- US-A1- 2022 159 100

## Description

### CROSS-REFERENCE TO RELATED APPLICATIONS

This application claims priorities to Chinese Patent Application No. 202210538050.X, filed with the China National Intellectual Property Administration on May 17, 2022 and entitled "UPLINK COMPRESSION TRANSMISSION METHOD", and to Chinese Patent Application No. 202210827300.1, filed with the China National Intellectual Property Administration on July 13, 2022 and entitled "COMMUNICATION METHOD AND APPARATUS".

### TECHNICAL FIELD

This application relates to the field of communication technologies, and in particular, to a communication method and apparatus.

### BACKGROUND

To meet an ever-increasing rate requirement of a network, it is particularly important to improve spectrum utilization of different services, especially an uplink transmission service. To alleviate a problem of limited uplink capacity, an enhanced solution of using an uplink data compression (uplink data compression, UDC) technology is proposed, to reduce a size of each uplink data packet by compressing the uplink data packet, reducing a rate requirement on uplink transmission and improving an uplink transmission capacity.

The existing UDC technology is usually used at a packet data convergence protocol (packet data convergence protocol, PDCP) layer. An application mechanism of the UDC technology is as follows: A transmitting end sends UDC data to a receiving end, where the UDC data is carried in PDCP packets. The receiving end may determine, based on sequence numbers (sequence numbers, SNs) included in headers of the received PDCP packets, PDCP packets that fail to be received, and the receiving end may send a PDCP control (control) protocol data unit (protocol data unit, PDU) to the transmitting end, to indicate the PDCP packets that fail to be received. After receiving the PDCP control PDU, the transmitting end may retransmit the PDCP packets that fail to be received.

This mechanism is equivalent to adding a retransmission mechanism to the PDCP layer. However, currently, a retransmission mechanism is also present at another protocol layer. After the PDCP retransmission mechanism is added, there are two layers of retransmission mechanisms. This may result in a plurality of retransmissions of same UDC data, wasting transmission resources.

WO2021023044A1 discloses a communication method and device, to ensure consistent compression dictionaries maintained by a compression node and a decompression node. The method comprises: the compression node obtaining a first compression dictionary, using the first compression dictionary to compress a first data packet, sending the compressed data packet to the decompression node, using the first compression dictionary to compress a second data packet, and sending a compressed data packet to the decompression node. Compared to a method in the prior art for updating a compression dictionary according to a first data packet, and then using the updated compression dictionary to compress a second data packet, the method according to this document does not use the first data packet to update the compression dictionary, and does not use the updated compression dictionary to compress the second data packet. Even if the first data packet is not able to be correctly received by the decompression node, consistency of the compression dictionary maintained by the compression node and the decompression node may still be achieved.

US2021360089A1 discloses example data compression methods and example base stations. One example method includes obtaining, by a base station, identification information of at least one of a data compression device or a data decompression device. A dictionary can then be generated based on the identification information. The dictionary can then be sent to the data compression device and the data decompression device to enable the data compression device and the data decompression device to perform data compression and data transmission based on the dictionary.

### SUMMARY

Embodiments of this application provide a communication method and apparatus, to reduce transmission resources.

According to a first aspect, a communication method according to appended claim 1 is provided. The method may be performed by a sending device, or may be performed by another device including a function of the sending device, or may be performed by a chip system or another functional module. The chip system or the functional module can implement the function of the sending device. The chip system or the functional module is, for example, disposed in the sending device. The sending device is, for example, a terminal device in air interface communication, a terminal device in sidelink communication, or a STA in Wi-Fi communication. The method includes: compressing first original data by using a first buffer, to obtain first compressed data, where the first buffer is a buffer corresponding to UDC; sending the first compressed data to a receiving device at a first moment; receiving first feedback information from the receiving device at a second moment, where the first feedback information indicates that the first compressed data is successfully received, and the first feedback information is physical layer feedback information or MAC layer feedback information; and updating the first buffer at a third moment based on the first original data in response to the first feedback information, to obtain a second buffer, where the second buffer includes the first original data. The second moment is later than the first moment, and the third moment is later than the second moment.

In embodiments of this application, whether data corresponding to an uplink compression technology is successfully received or fails to be received can be fed back, by using a feedback mechanism corresponding to the first feedback information, without introducing a feedback mechanism of another protocol layer (for example, a PDCP layer), reducing feedback resource overheads when ensuring transmission reliability.

The method further includes: sending first information at a fourth moment, where the first information includes first indication information, the first indication information indicates the receiving device to update a third buffer to obtain a fourth buffer, data included in the third buffer is the same as data included in the first buffer, data included in the fourth buffer is the same as data included in the second buffer, and the fourth moment is later than the second moment. The receiving device also maintains a buffer corresponding to the UDC, for example, the third buffer. In this case, the sending device indicates, by using the first indication information, the receiving device to update the third buffer, so that an occasion for updating a buffer by the receiving device is consistent with an occasion for updating a buffer by the sending device, maintaining consistency between the buffers of the two ends.

In the first aspect, the first information further includes second indication information, the second indication information indicates second compressed data, and the second compressed data is generated based on the second buffer. The first information may further indicate the second compressed data. For example, the first information includes the second compressed data, and the second compressed data is, for example, a next piece of compressed data of the first compressed data. In other words, the sending device indicates, by using information about sending the next piece of compressed data, the receiving device to update the third buffer, and does not need to send additional information to indicate the receiving device to update the third buffer. This helps reduce transmission overheads.

In the first aspect, the first information further includes second indication information, the second indication information indicates second compressed data, and the second compressed data is generated based on the first buffer. The sending device may first update the first buffer to obtain the second buffer, and then perform compression based on the second buffer to obtain the second compressed data, so that the buffer can be updated in a timely manner. Alternatively, the sending device may not update the first buffer temporarily, but continue to perform compression by using the first buffer to obtain the second compressed data. For example, the sending device may update the first buffer after receiving the second feedback information. In this manner, the sending device may update the first buffer after determining that the receiving device can update the third buffer. This helps maintain consistency of the buffers of the two ends.

In an optional implementation, the method further includes: sending second information, where the second information indicates first duration, so that the third moment is equal to or later than a moment obtained by adding the first duration to the fourth moment, or the third moment is equal to or later than a moment obtained by adding the first duration to the fifth moment. Generally, a moment at which the receiving device sends feedback information is usually later than a moment at which compressed data is received. If the sending device updates the first buffer after receiving the second feedback information, and the receiving device may update the third buffer after receiving the first indication information, an occasion for updating the third buffer by the receiving device may be inconsistent with an occasion for updating the first buffer by the sending device. Therefore, the first duration may be set. For example, after receiving information (for example, the first indication information) that indicates to update a buffer, the receiving device may wait the first duration before updating a formal buffer. Correspondingly, after receiving information (for example, the second feedback information) indicating that new compressed data is successfully received, the sending device may also wait the first duration before updating the formal buffer. The first duration is set, so that the sending device and the receiving device can keep consistency in occasions for updating the buffer.

In an optional implementation, the first indication information indicates a sequence number of the first compressed data. The first indication information may indicate the sequence number of the first compressed data, and is equivalent to indicating the receiving device to update the third buffer based on the first compressed data. It can be learned that this indication manner is simple and clear.

In an optional implementation, the first indication information is the sequence number of the first compressed data. A manner in which the first indication information indicates the sequence number of the first compressed data is, for example, that the first indication information includes the sequence number of the first compressed data. In addition, the first indication information may alternatively indicate the sequence number of the first compressed data in another manner. This is not limited in embodiments of this application.

In an optional implementation, the first compressed data includes M pieces of compressed data arranged based on sequence numbers, the first indication information is a sequence number of a last piece of compressed data in the M pieces of compressed data, and M is a positive integer. For example, the first indication information includes the sequence number of the last piece of compressed data, so that the receiving device can determine that the compressed data corresponding to the sequence number included in the first indication information and compressed data corresponding to a sequence number before the sequence number are both used to update the third buffer. In this indication manner, the first indication information may include only one sequence number. This helps reduce overheads of the first information.

In an optional implementation, the first compressed data includes M pieces of compressed data arranged based on sequence numbers, the first information includes at least one group of fields, a group of fields in the at least one group of fields includes a start field and an end field, the start field includes a sequence number of a 1^{st} piece of compressed data in a group of compressed data in the M pieces of compressed data, the end field includes a sequence number of a last piece of compressed data in the group of compressed data, and the group of compressed data is compressed data with consecutive sequence numbers. For example, sequence numbers of adjacent compressed data in the M pieces of compressed data may be inconsecutive. In this case, this implementation may be used. In this manner, a plurality of groups of fields respectively include sequence numbers of different compressed data, where a group of fields includes a group of consecutive sequence numbers, and sequence numbers included in different groups of fields are inconsecutive. In this way, the first indication information can completely indicate the M pieces of compressed data. In addition, a group of fields includes only a sequence number of a 1^{st} piece of compressed data and a sequence number of a last piece of compressed data in a group of consecutive compressed data, and does not necessarily include sequence numbers of all pieces of compressed data. This helps reduce overheads of the first information.

In an optional implementation, the first compressed data includes M pieces of compressed data arranged based on sequence numbers, the first information includes at least one group of fields, a group of fields in the at least one group of fields includes a start field and an offset field, the start field includes a sequence number of a 1^{st} piece of compressed data in a group of compressed data in the M pieces of compressed data, the offset field includes an offset between a sequence number of a last piece of compressed data in the group of compressed data and the sequence number of the 1^{st} piece of compressed data, and the group of compressed data is compressed data with consecutive sequence numbers. For example, sequence numbers of adjacent compressed data in the M pieces of compressed data may be inconsecutive. In this case, this implementation may also be used. In this manner, a group of fields may include a sequence number of a 1^{st} piece of compressed data in a group of compressed data, and an offset between a last piece of compressed data and the 1^{st} piece of compressed data. A data amount of the offset may be less than a data amount of a sequence number of the last piece of compressed data. Therefore, this manner can further reduce overheads of the first information.

In an optional implementation, the first compressed data includes M pieces of compressed data arranged based on sequence numbers, the first information includes a first group of fields and a second group of fields, the first group of fields includes a start field and an end field, the start field includes a sequence number of a 1^{st} piece of compressed data in a group of compressed data in the M pieces of compressed data, the end field includes a sequence number of a last piece of compressed data in the group of compressed data, the group of compressed data is compressed data with consecutive sequence numbers, the second group of fields includes a sequence number field, the sequence number field includes a sequence number of a piece of compressed data in the M pieces of compressed data, and M is an integer greater than or equal to 2. For example, sequence numbers of adjacent compressed data in the M pieces of compressed data may be inconsecutive. In this case, this implementation may further be used. For example, there are a plurality of groups of compressed data in the M pieces of compressed data, where at least one group of compressed data may include only one piece of compressed data. If this piece of compressed data is also indicated by two fields, resource overheads are increased. Therefore, one piece of compressed data may be indicated by a sequence number field. If a group of compressed data includes a plurality of pieces of compressed data, a format similar to the first group of fields may be used for indication. In this manner, the first indication information can indicate the M pieces of compressed data, and overheads are low.

In an optional implementation, the first compressed data includes M pieces of compressed data, the first information includes at least one group of fields, a group of fields in the at least one group of fields includes sequence numbers of N pieces of compressed data, the N pieces of compressed data are compressed data with consecutive sequence numbers, remaining fields in the at least one group of fields include sequence numbers of N-M pieces of compressed data, the M pieces of compressed data are compressed data remaining after the N-M pieces of compressed data are excluded from the N pieces of compressed data, and N is an integer greater than or equal to M. In this manner, the sequence numbers of the N pieces of compressed data may be indicated by the group of fields, and the sequence numbers of the N-M pieces of compressed data are indicated by the remaining fields. This is equivalent to excluding the N-M pieces of compressed data from the N pieces of compressed data, so that the M pieces of compressed data are indicated. For example, if a value of N-M is small, this indication manner helps reduce overheads of the first information.

In an optional implementation, the first information further includes second indication information, the second indication information indicates second compressed data. The first information may further indicate the second compressed data. For example, the first information includes the second compressed data, and the second compressed data is, for example, a next piece of compressed data of the first compressed data. In other words, the sending device may indicate, by using information about sending the next piece of compressed data, the receiving device to update the third buffer, and does not need to send additional information to indicate the receiving device to update the third buffer. This helps reduce transmission overheads.

In an optional implementation, the first indication information indicates an offset between a sequence number of the first compressed data and a sequence number of the second compressed data. When the first information includes the second indication information, the first indication information may further indicate the first compressed data in a manner of indicating the offset between the sequence number of the first compressed data and the sequence number of the second compressed data. A data amount of the offset may be less than a data amount of the sequence number of the first compressed data, and overheads of the first information can be reduced by indicating the offset.

According to a second aspect, a communication method according to appended claim 3 is provided. The method may be performed by a receiving device, or may be performed by another device including a function of the receiving device, or may be performed by a chip system or another functional module. The chip system or the functional module can implement the function of the receiving device. The chip system or the functional module is, for example, disposed in the receiving device. The receiving device is, for example, an access network device in air interface communication, a terminal device in sidelink communication, or an AP in Wi-Fi communication. The method includes: receiving first compressed data from a sending device at a first moment; sending first feedback information to the sending device at a second moment, where the first feedback information indicates that the first compressed data is successfully received, and the first feedback information is physical layer feedback information or MAC layer feedback information; and updating a third buffer at a sixth moment based on the first compressed data, to obtain a fourth buffer, where the fourth buffer includes first original data obtained by decompressing the first compressed data, and the third buffer is a buffer corresponding to an uplink compression technology UDC, where the second moment is later than the first moment, and the sixth moment is later than the second moment.

The method further includes: receiving first information at a fourth moment, where the first information includes first indication information, the first indication information indicates the receiving device to update the third buffer to obtain the fourth buffer, and the fourth moment is later than the second moment.

In an optional implementation, the updating a third buffer at a sixth moment based on the first compressed data, to obtain a fourth buffer includes: when the first information is successfully received, updating the third buffer at the sixth moment based on the first compressed data, to obtain the fourth buffer.

In the second aspect, the first information further includes second indication information, the second indication information indicates second compressed data, and the second compressed data is generated based on the second buffer.

Alternatively, in the second aspect, the first information further includes second indication information, the second indication information indicates second compressed data, and the second compressed data is generated based on the first buffer.

In an optional implementation, the method further includes: receiving second information, where the second information indicates first duration, so that the sixth moment is equal to or later than a moment obtained by adding the first duration to the fourth moment, or the sixth moment is equal to or later than a moment obtained by adding the first duration to the fifth moment.

In an optional implementation, the first indication information indicates a sequence number of the first compressed data.

In an optional implementation, the first indication information is the sequence number of the first compressed data.

In an optional implementation, the first compressed data includes M pieces of compressed data arranged based on sequence numbers, the first indication information is a sequence number of a last piece of compressed data in the M pieces of compressed data, and M is a positive integer.

In an optional implementation, the first compressed data includes M pieces of compressed data arranged based on sequence numbers, the first information includes at least one group of fields, a group of fields in the at least one group of fields includes a start field and an end field, the start field includes a sequence number of a 1^{st} piece of compressed data in a group of compressed data in the M pieces of compressed data, the end field includes a sequence number of a last piece of compressed data in the group of compressed data, and the group of compressed data is compressed data with consecutive sequence numbers.

In an optional implementation, the first compressed data includes M pieces of compressed data arranged based on sequence numbers, the first information includes at least one group of fields, a group of fields in the at least one group of fields includes a start field and an offset field, the start field includes a sequence number of a 1^{st} piece of compressed data in a group of compressed data in the M pieces of compressed data, the offset field includes an offset between a sequence number of a last piece of compressed data in the group of compressed data and the sequence number of the 1^{st} piece of compressed data, and the group of compressed data is compressed data with consecutive sequence numbers.

In an optional implementation, the first compressed data includes M pieces of compressed data arranged based on sequence numbers, the first information includes a first group of fields and a second group of fields, the first group of fields includes a start field and an end field, the start field includes a sequence number of a 1^{st} piece of compressed data in a group of compressed data in the M pieces of compressed data, the end field includes a sequence number of a last piece of compressed data in the group of compressed data, the group of compressed data is compressed data with consecutive sequence numbers, the second group of fields includes a sequence number field, the sequence number field includes a sequence number of a piece of compressed data in the M pieces of compressed data, and M is an integer greater than or equal to 2.

In an optional implementation, the first compressed data includes M pieces of compressed data, the first information includes at least one group of fields, a group of fields in the at least one group of fields includes sequence numbers of N pieces of compressed data, the N pieces of compressed data are compressed data with consecutive sequence numbers, remaining fields in the at least one group of fields include sequence numbers of N-M pieces of compressed data, the M pieces of compressed data are compressed data remaining after the N-M pieces of compressed data are excluded from the N pieces of compressed data, and N is an integer greater than or equal to M.

In an optional implementation, the first information further includes the second indication information, the second indication information indicates the second compressed data, and the first indication information indicates an offset between a sequence number of the first compressed data and a sequence number of the second compressed data.

For technical effects brought by the second aspect or the optional implementations, refer to the descriptions of the technical effects of the first aspect or the corresponding implementations.

According to a third aspect, a communication apparatus according to appended claim 4 is provided. The communication apparatus may be the sending device according to the first aspect, or a communication device including the sending device, or a functional module in the sending device, for example, a baseband apparatus or a chip system. In an optional implementation, the communication apparatus includes a baseband apparatus and a radio frequency apparatus. In another optional implementation, the communication apparatus includes a processing unit (or referred to as a processing module sometimes) and a transceiver unit (or referred to as a transceiver module sometimes). The transceiver unit can implement a sending function and a receiving function. When the transceiver unit implements the sending function, the transceiver unit may be referred to as a sending unit (or referred to as a sending module sometimes). When the transceiver unit implements the receiving function, the transceiver unit may be referred to as a receiving unit (or referred to as a receiving module sometimes). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

The processing unit is configured to perform the method of the first aspect or the second aspect.

In an optional implementation, the communication apparatus further includes a storage unit (or referred to as a storage module sometimes). The processing unit is configured to be coupled to the storage unit, and execute a program or instructions in the storage unit, so that the communication apparatus performs a function of the sending device according to the first aspect.

According to a fourth aspect, a computer-readable storage medium is provided. The computer-readable storage medium is configured to store a computer program or instructions. When the computer program or the instructions are run, the method performed by the sending device or the receiving device in the foregoing aspects is implemented.

According to an fifth aspect, a computer program product including instructions is provided. When the computer program product is run on a computer, the methods according to the foregoing aspects are implemented.

### BRIEF DESCRIPTION OF DRAWINGS

FIG. 1Ais a diagram of a PDCP header and a UDC header;
FIG. 1B is a diagram of a UDC header of a control PDU;
FIG. 1C is a diagram of an application mechanism of a UDC technology;
FIG. 2 is a diagram of an application scenario of an embodiment of this application;
FIG. 3, FIG. 6, and FIG. 7 are several flowcharts of a communication method according to an embodiment of this application;
FIG. 4A and FIG. 4B are two flowcharts of a data receiving and sending process according to an embodiment of this application;
FIG. 5 is a diagram of working of a formal buffer and a standby buffer according to an embodiment of this application;
FIG. 8 is a sequence diagram of a data sending process;
FIG. 9A to FIG. 9J are diagrams of several implementations of first indication information according to an embodiment of this application;
FIG. 10 is a diagram of an apparatus according to an embodiment of this application; and
FIG. 11 is a diagram of another apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

In embodiments of this application, unless otherwise specified, a quantity of nouns represents "a singular noun or plural nouns", that is, "one or more". "At least one" means one or more, and "a plurality of" means two or more. "And/Or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" described in embodiments of this application are used to distinguish between a plurality of objects, but are not used to limit sizes, content, sequences, time sequences, priorities, importance, or the like of the plurality of objects. For example, a first radio resource control (radio resource control, RRC) request message and a second RRC request message may be a same message, or may be different messages. In addition, the names do not indicate that the two messages are different in content, size, application scenario, transmitting end/receiving end, priority, importance, or the like. In addition, step numbers in embodiments described in this application are merely used to distinguish between different steps, but are not used to limit a sequence of the steps. For example, S301 may be performed before S302, may be performed after S302, or may be performed at the same time with S302.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the device. The terminal device is configured to connect people, things, machines, and the like, and may be widely used in various scenarios. For example, the terminal device includes but is not limited to terminal devices in scenarios such as cellular communication, device-to-device (device-to-device, D2D) communication, vehicle-to-everything (vehicle-to-everything, V2X), machine-to-machine/machine-type communications (machine-to-machine/machine-type communications, M2M/MTC), internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, smart office, smart wearables, smart transportation, a smart city (smart city), an uncrewed aerial vehicle, and a robot. The terminal device may be sometimes referred to as a UE, a terminal, an access station, a UE station, a remote station, a wireless communication device, a user apparatus, or the like. For ease of description, an example in which the terminal device is a UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a subsequent evolved base station in the 3rd generation partnership project (3rd generation partnership project, 3GPP), an access node in a wireless fidelity (wireless fidelity, Wi-Fi) system, a wireless relay node, a wireless backhaul node, or the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a vehicle-to-everything (vehicle-to-everything, V2X) technology may be a roadside unit (roadside unit, RSU). The following uses an example in which the access network device is a base station for description. The base station may communicate with the terminal device, or may communicate with the terminal device via a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments this application. A 5G system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus that can support the network device in implementing the function, for example, a chip system. The apparatus may be installed in the network device. In the technical solutions provided in embodiments of this application, an example in which the apparatus configured to implement the function of the network device is a network device is used to describe the technical solutions provided in embodiments of this application.

UDC allows new data to be compressed based on previously compressed data, reducing a requirement for a data transmission rate. For example, data of a service is strongly similar. Therefore, new data may be compressed with reference to compressed data, to reduce a capacity of a data packet. For example, during web page browsing or video watching, uplink data is mainly transmission control protocol (transmission control protocol, TCP) feedback data or textual description data, and a large quantity of repeated characters easily appear between the data. For example, in TCP feedback data, most content of actual content (acknowledgment (ACK) or negative acknowledgment (NACK)) data is internet protocol (internet protocol, IP) header content, such as an IP address, and the content basically remains unchanged for a same service. Therefore, UDC may be used to reduce sending of repeated characters in a manner in which current data is compressed and encoded based on previous data, reducing a capacity of a data packet. Further, for a service such as web page browsing, it may be considered that text content carried in different data is also highly repeated, and UDC may also be used to reduce repeatedly transmitted text data, reducing a capacity of a data packet.

For UDC, new data is compressed based on compressed data. For example, a transmitting end maintains a compression buffer (buffer) that may also be referred to as a dictionary (dictionary), in other words, the compression buffer includes the dictionary. When new data (for example, referred to as original data) is to be transmitted, the transmitting end may search the compression buffer for a character that is the same as a character included in the original data, and compress the original data based on the character found in the compression buffer, to obtain compressed data. After the compressed data is obtained, the original data corresponding to the compressed data is written into the compression buffer. A size of the compression buffer is fixed, for example, 8K bytes or 32K bytes. Therefore, if the compression buffer is full, newly written data causes old data in the compression buffer to overflow. For example, data earliest stored in the compression buffer is cleared, to write new data. A receiving end also maintains a compression buffer. After receiving compressed data, the receiving end decompresses the compressed data based on the compression buffer. Therefore, to enable reliable transmission of UDC data, statuses of the compression buffer at the receiving end and the compression buffer at the transmitting end need to be consistent, in other words, content of the two compression buffers needs to be consistent.

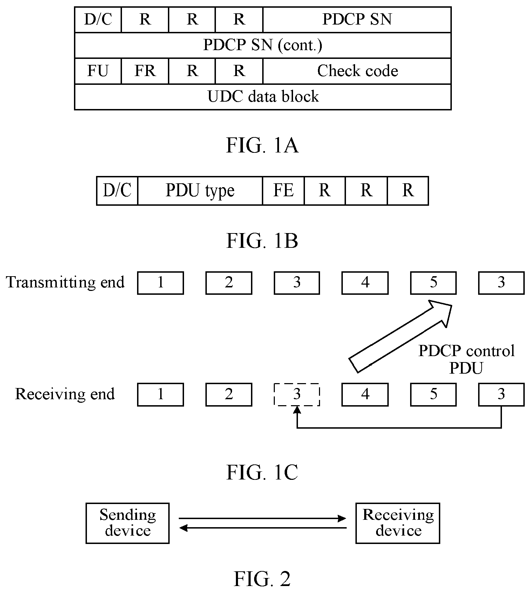

An existing UDC technology is usually used at a PDCP layer in a cellular network. FIG. 1A shows a PDCP header (header) and a UDC header. In FIG. 1A, an example in which a length of a PDCP SN is 12 bits (bits) is used. In FIG. 1A, first two bytes are the PDCP header, a 3^{rd} byte is the UDC header, and a 4^{th} byte may include UDC data. An "FU" field indicates whether data corresponding to the UDC header is compressed by using UDC, an "FR" field indicates whether to reset a UDC compression buffer, and a "checksum" field is used by a receiving end to check whether the UDC compression buffer is synchronized. If the check performed by the receiving end on the "checksum" fails, UDC compression buffers of a transmitting end and the receiving end are not synchronized, and the receiving end may send a control PDU to the transmitting end. For a UDC header of the control PDU, refer to FIG. 1B, where an "FE" field indicates the check on the "checksum". For example, when a value of the "FE" field is "1", it indicates that the check on the "checksum" fails. In this case, the transmitting end may reset the UDC compression buffer of the transmitting end, and after the reset, send a data packet (a header is shown in FIG. 1A) by using the reset UDC compression buffer, where an "FR" field in the header of the data packet notifies the receiving end to reset the UDC compression buffer. After receiving the data packet, the receiving end may reset the UDC compression buffer, and process the data packet based on the reset UDC compression buffer.

For example, for an application mechanism of the UDC technology, refer to FIG. 1C. A transmitting end sends five PDCP packets to a receiving end: a PDCP packet 1 to a PDCP packet 5, where one PDCP packet carries one piece of UDC data, and the UDC data carried in the PDCP packet is compressed data. If the receiving end successfully receives the PDCP packet 1 and the PDCP packet 2, the receiving end may update a compression buffer of the receiving end based on UDC data included in the PDCP packet 1 and the PDCP packet 2. However, after receiving the PDCP packet 4, the receiving end finds that the PDCP packet 3 is not received. In this case, the receiving end cannot decompress the PDCP packet 4. The receiving end may send a PDCP control PDU to the transmitting end, to indicate that the PDCP packet 3 fails to be received. After receiving the PDCP control PDU, the transmitting end retransmits the PDCP packet 3. After receiving the PDCP packet 3, the receiving end may update the compression buffer of the receiving end based on UDC data carried in the PDCP packet 3, to decompress the PDCP packet 4 and a subsequent PDCP packet by using the updated compression buffer.

The foregoing communication process is equivalent to adding a retransmission mechanism to a PDCP layer. However, currently, a retransmission mechanism is also present at another protocol layer. For example, a retransmission mechanism at a physical layer exists in communication between UEs or communication between a UE and an access network device. Alternatively, a feedback mechanism at a media access control (media access control, MAC) layer exists in communication between a station (station, STA) and an access point (access point, AP) in a wireless fidelity (wireless fidelity, Wi-Fi) system. In this case, after the retransmission mechanism at the PDCP layer is added, there are two layers of retransmission mechanisms. This may result in a plurality of retransmissions of same UDC data, wasting transmission resources.

In view of this, the technical solutions in embodiments of this application are provided. In embodiments of this application, first feedback information is physical layer feedback information or MAC layer feedback information. For example, if both a sending device and a receiving device are terminal devices, or the sending device is a terminal device and the receiving device is an access network device, the first feedback information may be physical layer feedback information. For another example, if the sending device is a STA and the receiving device is an AP, the first feedback information may be MAC layer feedback information. It may be understood that, in embodiments of this application, whether data corresponding to an uplink compression technology is successfully received or fails to be received can be fed back by using a feedback mechanism corresponding to the first feedback information, without introducing a feedback mechanism of another protocol layer (for example, a PDCP layer), reducing a probability of repeated feedback mechanisms and reducing transmission overheads.

The technical solutions provided in embodiments of this application may be applied to a 4th generation mobile communication technology (4th generation, 4G) system, for example, a long term evolution (long term evolution, LTE) system, or may be applied to a 5G system, for example, an NR system, or may be applied to a next generation mobile communication system or another similar communication system, or may be applied to a short-distance communication system, for example, a Wi-Fi system or another short-distance communication system. This is not specifically limited. In addition, the technical solutions provided in embodiments of this application may be applied to a device-to-device (device-to-device, D2D) scenario, for example, an NR-D2D scenario, or may be applied to a V2X scenario, for example, an NR-V2X scenario. For example, the technical solutions may be applied to internet of vehicles, for example, V2X, or may be applied to a field such as intelligent driving, assisted driving, or intelligent connected vehicles. If the technical solutions are applied to a D2D scenario, both communication parties may be UEs. If the technical solutions are applied to a cellular scenario, a communication sender may be a UE, and a communication receiver may be a network device (for example, an access network device), or both communication parties may be network devices. If the technical solutions are applied to a short-distance communication scenario, for example, a Wi-Fi scenario, a communication sender may be a STA, and a communication receiver may be an AP.

FIG. 2 is a diagram of an application scenario according to an embodiment of this application. FIG. 2 includes a sending device and a receiving device. For example, both the sending device and the receiving device are UEs; or the sending device is a UE, and the receiving device is an access network device; or the sending device is a STA, and the receiving device is an AP.

To better describe embodiments of this application, the following describes methods provided in embodiments of this application with reference to the accompanying drawings. Unless otherwise specified, steps indicated by dashed lines in the accompanying drawings corresponding to embodiments of this application are optional steps. "Data" described in embodiments of this application is data corresponding to an uplink data compression technology, and the data may include original data and compressed data. For example, the "original data" refers to data before compression is performed by using the uplink data compression technology, or refers to data obtained by performing decompression by using the uplink data compression technology; and the "compressed data" refers to data obtained by compressing the "original data" by using the uplink data compression technology. The uplink data compression technology is, for example, a UDC technology, or another technology in which current data is compressed and encoded based on previous data. In the following description process, an example in which the uplink data compression technology is the UDC technology is used.

In embodiments of this application, if the technical solutions in embodiments of this application are applied to SL communication or Uu interface communication, "SN" and "PDCP SN" may be a same concept, and may be replaced with each other.

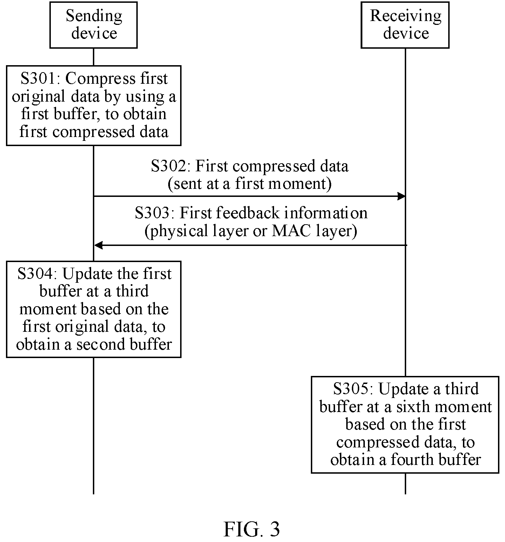

An embodiment of this application provides a communication method. FIG. 3 is a flowchart of the method. The method may be applied to the network architecture shown in FIG. 2. For example, a sending device in the method is the sending device in FIG. 2, and a receiving device in the method is the receiving device in FIG. 2.

S301: The sending device compresses first original data by using a first buffer, to obtain first compressed data. The first buffer is, for example, a buffer corresponding to a UDC technology, and may also be referred to as a UDC buffer.

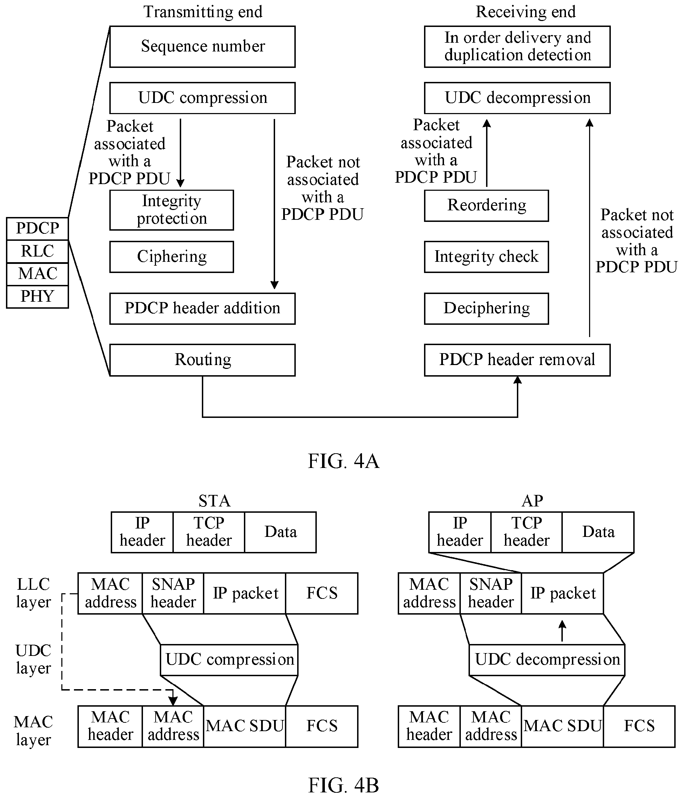

FIG. 4A shows a data sending and receiving procedure. In FIG. 4A, an example in which both a sending device and a receiving device are UEs is used, in other words, sidelink transmission is used as an example. Optionally, the sending device may communicate with the receiving device by using a sidelink (sidelink, SL). For example, a radio link control (radio link control, RLC) layer may be in unacknowledged mode (unacknowledged mode, UM) or (transparent mode, TM). Alternatively, the sending device is a UE, and the receiving device is an access network device. The first original data is, for example, to-be-sent data, and the first original data may include one or more pieces of to-be-sent data. If the first original data includes a plurality of pieces of data, the plurality of pieces of data may be separately processed. FIG. 4A shows a process of processing one piece of data included in the first original data.

In FIG. 4A, the sending device adds a sequence number (for example, a step shown by "sequence number" in FIG. 4A) to the first original data, and compresses (compression), at a PDCP layer based on the UDC technology, the first original data to which the sequence number is added. For example, the sending device may compress, by using the first buffer, the first original data to which the sequence number is added, to obtain compressed data. For example, the first compressed data in this embodiment of this application is the compressed data. After the compressed data is obtained, a UDC header may be added to the compressed data at the PDCP layer. For the UDC header, refer to FIG. 1A. The first original data is associated with a PDCP service data unit (service data unit, SDU). Therefore, the PDCP layer assembles the data to which the UDC header is added, performs operations such as integrity protection (integrity protection) and ciphering (ciphering) on the data, adds a PDCP header (add PDCP header) to a result obtained through the operations, obtains a PDCP protocol data unit (protocol data unit, PDU) based on the result to which the PDCP header is added, and finally sends the PDCP PDU to the corresponding RLC layer (represented as routing (routing) in FIG. 4A). For the PDCP header, refer to FIG. 1A. The RLC layer considers the received information as an RLC SDU. The RLC layer performs an operation such as segmentation on the RLC SDU, and adds an RLC header to the RLC SDU to obtain an RLC PDU. The RLC layer sends the RLC PDU to a media access control (media access control, MAC) layer of the sending device. The MAC layer adds a MAC header to the received data, and multiplexes, into a MAC PDU (MPDU), the data to which the MAC header is added. For example, in a multiplexing manner, the MAC layer may add, to the MPDU, the data to which the MAC header is added, and the MPDU may include the data to which the MAC header is added. Main functions of the MAC layer are to multiplex (for example, add) a plurality of pieces of data from an upper layer (for example, the RLC layer) into an MPDU, and transfer the MPDU to a physical (PHY) layer. The physical layer performs processing such as cyclic redundancy check (cyclic redundancy check, CRC), channel encoding, interleaving, rate matching, and mapping on the MPDU, and maps obtained data to a transport block (transport block, TB) for transmission.

A physical layer of the receiving device performs channel decoding on the received TB, and performs CRC decoding on a result obtained through the channel decoding. If the CRC decoding succeeds, the receiving device feeds back an acknowledgment (ACK) to the sending device through the physical layer based on a hybrid automatic repeat request (hybrid automatic repeat request, HARQ) mechanism, to indicate that the TB is successfully received. If the CRC decoding fails, the receiving device feeds back a negative acknowledgment (NACK) to the sending device through the physical layer, to indicate that the TB fails to be received. In a transmission process between the sending device and the receiving device, each TB may correspond to one HARQ process number, and usually, a HARQ feedback result is specific to a HARQ process. In addition, if the CRC decoding succeeds, the physical layer of the receiving device submits a decoding result to the MAC layer. The MAC layer performs corresponding processing (for example, removes a MAC header) and then submits the decoding result to the RLC layer. The RLC layer performs corresponding processing (for example, removes an RLC header) and then submits the decoding result to the PDCP layer. The PDCP layer may remove a PDCP header of the received information, and perform operations such as deciphering (deciphering) and integrity verification (integrity verification) on the information whose header is removed. If the verification succeeds, the PDCP layer may reorder (reordering) the received information, associate the reordered information with a PDCP PDU, remove a UDC header of the PDCP PDU, decompress (decompression), based on the UDC technology, the information whose UDC header is removed, and perform processing such as in order delivery and duplication detection (in order delivery and duplication detection) on data obtained through the decompression.

In addition, FIG. 4A further includes a control information sending and receiving procedure. Different from the data processing procedure, if information to be sent by a PDCP layer does not have an associated PDCP SDU, for example, PDCP control information, after adding a UDC header to compressed PDCP control information, a PDCP layer of the sending device does not need to perform steps such as integrity protection and ciphering, but adds a PDCP header to the information, and sends the information to which the PDCP header is added to an RLC layer. For example, one type of PDCP control information is an interspersed robust header compression feedback (interspersed robust header compression feedback, interspersed ROHC feedback) packet. In addition, if the receiving device determines, based on the PDCP header, that the corresponding packet is the PDCP control information, after removing the PDCP header of the received information, the PDCP layer of the receiving device does not need to perform processing such as deciphering, but may remove the UDC header of the received information, decompress, based on the UDC technology, the information whose UDC header is removed, and perform processing such as in order delivery and duplication detection on data obtained through the decompression. Alternatively, after removing the UDC header of the received information, the receiving device may not need to perform processing such as UDC decompression on the information whose header is removed, but may directly perform processing such as in order delivery and duplication detection on the information whose header is removed.

FIG. 4B shows another data sending and receiving procedure. In FIG. 4B, an example in which a sending device is a STA and a receiving device is an AP is used, in other words, a Wi-Fi system is used as an example. Optionally, the sending device and the receiving device may communicate through a Wi-Fi link. To use the UDC technology in the Wi-Fi system, a UDC layer may be added to a communication protocol layer. To be specific, the UDC layer may be added to protocol layers of both the sending device and the receiving device, to implement a UDC function. The UDC layer may be located between a logical link control (logical link control, LLC) layer and a MAC layer. If the UDC layer is located between the LLC layer and the MAC layer, feedback may be performed by the MAC layer. Alternatively, if the LLC layer also has a guarantee mechanism, the UDC layer may be located above the LLC layer. In this case, feedback may be performed by the LLC layer, and the UDC layer may perform operations such as data receiving and sending by using feedback information of the LLC layer. Therefore, in the Wi-Fi system, the first feedback information in this embodiment of this application may be MAC layer information or LLC layer information. In this embodiment of this application, an example in which the UDC layer is located between the LLC layer and the MAC layer is used. Therefore, an example in which the first feedback information is MAC layer information is also used.

For example, in the Wi-Fi system, when internet protocol (internet protocol, IP) data arrives at an LLC layer of the sending device, the LLC layer adds a MAC address, a subnetwork access protocol (subnetwork access protocol, SNAP) address, and a frame check sequence (frame check sequence, FCS) to the IP data, to obtain processed data. A UDC layer may perform UDC compression, based on a UDC buffer (for example, a first buffer), on the data processed by the LLC layer, to obtain compressed data. For example, the processed data is the first original data, and the compressed data is the first compressed data in this embodiment of this application. The UDC layer may add a UDC header to the compressed data, and the compressed data to which the UDC header is added may be delivered to the MAC layer as a MAC SDU. A MAC layer adds a MAC header to the received data, where a MAC address in the MAC header is the same as a MAC address of the LLC layer. In addition, the MAC layer regenerates an FCS for the data to form an MPDU, and the MPDU is delivered to a physical layer of the sending device for transmission. After receiving the MPDU, the receiving device checks, based on the FCS included in the MPDU, whether the data is correctly received. If the MPDU is correctly received, a MAC layer of the receiving device feeds back an ACK to the sending device, and delivers an MSDU corresponding to the MPDU to a UDC layer of the receiving device. The UDC layer performs processing such as decompression on the data carried in the MSDU.

S302: The sending device sends the first compressed data to the receiving device at a first moment. Correspondingly, the receiving device receives the first compressed data from the sending device at the first moment. The "moment" in embodiments of this application may be understood as a time point, or may be understood as a time period. The time period is, for example, a subframe (subframe), a slot (slot), a mini-slot (mini-slot), or an orthogonal frequency division multiplexing (orthogonal frequency division multiplexing, OFDM) symbol (symbol). For example, the first moment may be a time point, or one or more slots.

It can be learned from the description of S301 that, after obtaining the first compressed data, the sending device may further process the first compressed data, and finally send a transmission packet that carries the first compressed data. In SL transmission or Uu interface transmission, the transmission packet is, for example, a TB. In Wi-Fi system transmission, the transmission packet is, for example, an MDU. Correspondingly, that the receiving device receives the first compressed data may also be understood as receiving the transmission packet that carries the first compressed data. For example, if the first original data includes one or more pieces of data, the first compressed data may include one or more pieces of compressed data, where one piece of compressed data may be carried by one transmission packet. For example, there is a one-to-one correspondence between compressed data and transmission packets. Alternatively, a plurality of pieces of compressed data may be carried by one transmission packet. Alternatively, one piece of compressed data may be carried by a plurality of transmission packets. Therefore, there may be one or more transmission packets used to carry the first compressed data.

S303: The receiving device sends first feedback information to the sending device at a second moment. Correspondingly, the sending device receives the first feedback information from the receiving device at the second moment. The first feedback information may indicate whether the first compressed data is successfully received or fails to be received. In this embodiment of this application, the first feedback information is, for example, physical layer feedback information, for example, HARQ feedback information. For example, if the first feedback information is a first value, it indicates that the first compressed data is successfully received; or if the first feedback information is a second value, it indicates that the first compressed data fails to be received. The first value is, for example, "1", "true (true)", or "ACK", and the second value is, for example, "0", "false (false)", or "NACK". In this embodiment of this application, an example in which the first value is an ACK and the second value is a NACK is mainly used.

An SL scenario in which both the sending device and the receiving device are UEs is used as an example. It may be understood that, if the first feedback information is an ACK, the sending device may consider that a TB corresponding to a HARQ process corresponding to the ACK has been successfully received by the receiving device. Further, if the TB corresponding to the HARQ process carries compressed data, the sending device may also consider that the compressed data has been successfully received by the receiving device, and the physical layer of the sending device may indicate, to the PDCP layer of the sending device, that the first original data (or the first compressed data) corresponding to the first compressed data has been successfully received. Alternatively, if the first feedback information is a NACK, the sending device may consider that the receiving device fails to receive a TB corresponding to a HARQ process corresponding to the NACK. Further, if the TB corresponding to the HARQ process carries compressed data, the sending device may also consider that the compressed data fails to be received, and the physical layer of the sending device may indicate, to the PDCP layer of the sending device, that the first original data (or the first compressed data) corresponding to the first compressed data fails to be received. In this way, in this embodiment of this application, whether data corresponding to an uplink data compression technology is successfully received or fails to be received can be fed back by using a feedback mechanism (for example, a physical layer feedback mechanism) corresponding to the first feedback information, without introducing a feedback mechanism of another protocol layer (for example, a PDCP layer), reducing a probability of repeated feedback mechanisms and reducing transmission overheads.

If a quantity of TBs used to carry the first compressed data is 1, the receiving device sends the first feedback information to the sending device for the TB. If the sending device receives first feedback information of a HARQ process corresponding to the TB, the sending device may consider that the first compressed data is successfully received or fails to be received. For example, the first compressed data is transmitted through a TB whose HARQ process number is 3. If the receiving device successfully decodes the TB, the receiving device may send, to the sending device, first feedback information corresponding to the TB, and the first feedback information is an ACK. If the sending device receives the ACK corresponding to the HARQ process number 3, the sending device may determine that the first compressed data is successfully received. Alternatively, if the receiving device fails to decode the TB, the receiving device may send, to the sending device, first feedback information corresponding to the TB, and the first feedback information is a NACK. If the sending device receives the NACK corresponding to the HARQ process number 3, the sending device may determine that the first compressed data fails to be received. There may be two cases in which the quantity of TBs used to carry the first compressed data is 1. In one case, the TB is used to carry only the first compressed data, and is not used to carry other compressed data. In this case, the sending device may determine, based on the first feedback information of the HARQ process corresponding to the TB, whether the first compressed data is successfully received or fails to be received. In the other case, the TB is further used to carry other compressed data in addition to the first compressed data. In this case, the sending device may also determine, based on the first feedback information of the HARQ process corresponding to the TB, whether the first compressed data and the other compressed data are successfully received or fail to be received.

Alternatively, if the quantity of TBs used to carry the first compressed data is greater than 1, that is, a plurality of TBs are used to carry the first compressed data, the receiving device sends first feedback information to the sending device for each of the plurality of TBs. In this case, the receiving device may send a plurality of pieces of first feedback information for the plurality of TBs. If the sending device receives the plurality of pieces of first feedback information corresponding to the plurality of TBs, the sending device may consider that the first compressed data is successfully received or fails to be received. For example, the first compressed data is transmitted through a TB 1 whose HARQ process number is 3 and a TB 2 whose HARQ process number is 4. If the receiving device successfully decodes the TB 1, the receiving device may send first feedback information 1 corresponding to the TB 1 to the sending device, and the first feedback information 1 is an ACK. If the receiving device successfully decodes the TB 2, the receiving device may send first feedback information 2 corresponding to the TB 2 to the sending device, and the first feedback information 2 is an ACK. If the sending device receives the ACK corresponding to the HARQ process number 3 and the ACK corresponding to the HARQ process number 4, the sending device may determine that the first compressed data is successfully received. Alternatively, if the receiving device fails to decode either or both of the TB 1 or the TB 2, the receiving device may send, to the sending device, first feedback information corresponding to a TB that fails to be decoded, and the first feedback information is a NACK. If the sending device receives the NACK corresponding to the HARQ process number 3 and/or the HARQ process number 4, the sending device may determine that the first compressed data fails to be received.

A Wi-Fi scenario in which the sending device is a STA and the receiving device is an AP is used as an example. It may be understood that, if the first feedback information is an ACK, the sending device may consider that an MPDU corresponding to the ACK has been successfully received by the receiving device. Further, if the TB carries compressed data, the sending device may also consider that the compressed data has been successfully received by the receiving device, and the MAC layer of the sending device may indicate, to the UDC layer of the sending device, that the first original data (or the first compressed data) corresponding to the first compressed data has been successfully received. Alternatively, if the first feedback information is a NACK, the sending device may consider that the receiving device fails to receive an MPDU corresponding to the NACK. Further, if the MPDU carries compressed data, the sending device may also consider that the compressed data fails to be received, and the MAC layer of the sending device may indicate, to the UDC layer of the sending device, that the first original data (or the first compressed data) corresponding to the first compressed data fails to be received. In this way, in this embodiment of this application, whether data corresponding to an uplink data compression technology is successfully received or fails to be received can be fed back by using a feedback mechanism (for example, a MAC layer feedback mechanism) corresponding to the first feedback information, without introducing a feedback mechanism of another protocol layer (for example, a PDCP layer), reducing a probability of repeated feedback mechanisms and reducing transmission overheads.

If a quantity of MPDUs used to carry the first compressed data is 1, the receiving device sends the first feedback information to the sending device for the MPDU. If the sending device receives first feedback information corresponding to the MPDU, the sending device may consider that the first compressed data is successfully received or fails to be received. For example, the first compressed data is transmitted through one MPDU. If the receiving device successfully decodes the MPDU, the receiving device may send, to the sending device, first feedback information corresponding to the MPDU, and the first feedback information is an ACK. If the sending device receives the ACK corresponding to the MPDU, the sending device may determine that the first compressed data is successfully received. Alternatively, if the receiving device fails to decode the MPDU, the receiving device may send, to the sending device, first feedback information corresponding to the MPDU, and the first feedback information is a NACK. If the sending device receives the NACK corresponding to the MPDU, the sending device may determine that the first compressed data fails to be received. There may be two cases in which the quantity of MPDUs used to carry the first compressed data is 1. In one case, the MPDU is used to carry only the first compressed data, and is not used to carry other compressed data. In this case, the sending device may determine, based on the first feedback information corresponding to the MPDU, whether the first compressed data is successfully received or fails to be received. In the other case, the MPDU is further used to carry other compressed data in addition to the first compressed data. In this case, the sending device may also determine, based on the first feedback information corresponding to the MPDU, whether the first compressed data and the other compressed data are successfully received or fail to be received.

Alternatively, if the quantity of MPDUs used to carry the first compressed data is greater than 1, that is, a plurality of MPDUs are used to carry the first compressed data, the receiving device separately sends first feedback information to the sending device for the plurality of MPDUs. If the sending device receives the first feedback information (including a plurality of pieces of first feedback information) corresponding to the plurality of MPDUs, the sending device may consider that the first compressed data is successfully received or fails to be received. For example, the first compressed data is transmitted through an MPDU 1 and an MPDU 2. If the receiving device successfully decodes the MPDU 1, the receiving device may send first feedback information 1 corresponding to the MPDU 1 to the sending device, and the first feedback information 1 is an ACK. If the receiving device successfully decodes the MPDU 2, the receiving device may send first feedback information 2 corresponding to the MPDU 2 to the sending device, and the first feedback information 2 is an ACK. If the sending device receives the ACK corresponding to the MPDU 1 and the ACK corresponding to the MPDU 2, the sending device may determine that the first compressed data is successfully received. Alternatively, if the receiving device fails to decode either or both of the MPDU 1 or the MPDU 2, the receiving device may send, to the sending device, first feedback information corresponding to an MPDU that fails to be decoded, and the first feedback information is a NACK. If the sending device receives the NACK corresponding to the MPDU 1 and/or the MPDU 2, the sending device may determine that the first compressed data fails to be received.

S304: The sending device updates the first buffer at a third moment based on the first original data in response to the first feedback information, to obtain a second buffer. The second buffer may include the first original data.

Optionally, in this embodiment of this application, two types of buffers may be provided. One type of buffer may be referred to as a standby buffer, and the other type of buffer may be referred to as a formal buffer. Both the two types of buffers are buffers corresponding to the UDC technology. It may be understood that a buffer used to compress original data is a formal buffer, and a buffer used to store data to be added to the formal buffer is a standby buffer. Both the sending device and the receiving device may maintain the two types of buffers. For example, a formal buffer of the sending device may be referred to as the first buffer before being updated, for example, before S304 is performed; and the formal buffer may be referred to as the second buffer after being updated, for example, after S304 is performed. In other words, for ease of description, in this embodiment of this application, the to-be-updated formal buffer maintained by the sending device is referred to as the first buffer, and the updated formal buffer is referred to as the second buffer.

Before receiving the first feedback information, the sending device cannot determine whether the first original data can be used to update the formal buffer (in this case, the formal buffer is referred to as the first buffer). Therefore, before the sending device receives the first feedback information, the PDCP layer of the sending device may temporarily add the first original data to the standby buffer. If the sending device receives the first feedback information corresponding to the first compressed data, and the first feedback information is an ACK, the physical layer of the sending device may indicate, to the PDCP layer, that the first compressed data is successfully received. In this case, the PDCP layer may extract the first original data in the standby buffer from the standby buffer, and place the first original data in the formal buffer. In this way, the second buffer is obtained. If the sending device needs to compress other original data subsequently, the second buffer may be used for compression.

The processing process in FIG. 4A is used as an example. If an SN of the first compressed data is 0 (an SN of the first original data is also 0), after operations such as encapsulation and encoding at the RLC layer, the MAC layer, and the PHY layer are performed on the first compressed data, the first compressed data is transmitted through a TB whose HARQ process number is 2. If the receiving device successfully decodes the TB, the receiving device sends an ACK to the sending device for the TB. If the receiving device fails to decode the TB, the receiving device feeds back a NACK to the sending device for the TB. After the sending device receives a HARQ feedback (for example, the first feedback information) corresponding to the HARQ process number 2, if the HARQ feedback is an ACK, the physical layer of the sending device may determine that the first compressed data whose SN is 0 is successfully received. Therefore, the physical layer may notify a layer (for example, the PDCP layer) in which UDC is performed that data whose SN is 0 (or compressed data whose SN is 0 or original data whose SN is 0) may be used for subsequent data compression. In this case, the PDCP layer may extract the original data (for example, the first original data) whose SN is 0 from the standby buffer of the sending device, and add the original data to the first buffer. In this way, the second buffer is obtained.

S305: The receiving device updates a third buffer at a sixth moment based on the first compressed data, to obtain a fourth buffer.

The receiving device may also maintain a standby buffer and a formal buffer. For example, the formal buffer of the receiving device may be referred to as the third buffer before being updated, for example, before S305 is performed; and the formal buffer may be referred to as the fourth buffer after being updated, for example, after S305 is performed. In other words, for ease of description, in this embodiment of this application, the to-be-updated formal buffer maintained by the receiving device is referred to as the third buffer, and the updated formal buffer is referred to as the fourth buffer. The third buffer corresponds to the first buffer of the sending device. For example, data included in the third buffer is the same as data included in the first buffer. The fourth buffer corresponds to the second buffer of the sending device. For example, data included in the fourth buffer is the same as data included in the second buffer.

If the first compressed data is successfully received, the sending device may perform S304, and the receiving device may perform S305. The sixth moment may be later than the third moment, or may be earlier than the third moment, or may be the same as the third moment. That the receiving device obtains the fourth buffer based on the first compressed data and the third buffer may be understood as that the receiving device obtains the fourth buffer based on the original data corresponding to the first compressed data and the third buffer. For example, the receiving device may add, to the third buffer, the first original data obtained by decompressing the first compressed data, and an obtained buffer is the fourth buffer.

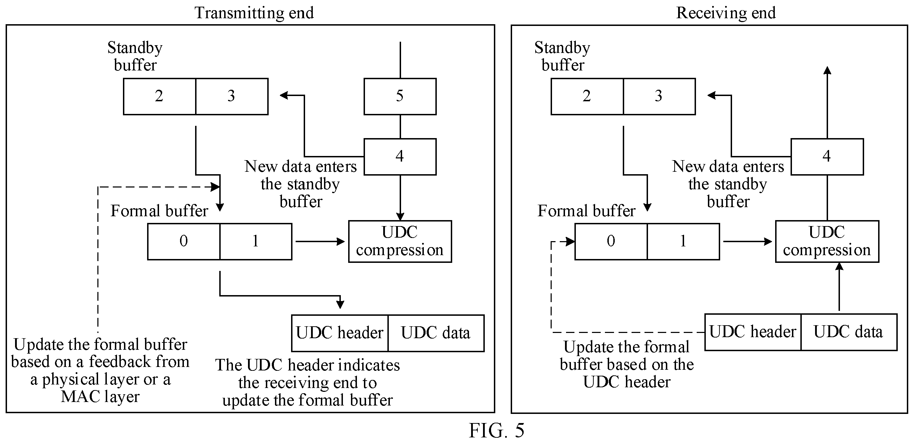

FIG. 5 is a diagram of working of a formal buffer and a standby buffer in an original data sending process. FIG. 5 may correspond to the UDC compression step in the data receiving and sending process shown in FIG. 4A, or may correspond to the UDC compression step in the data receiving and sending process shown in FIG. 4B. In FIG. 5, both a first buffer of a sending device and a third buffer of a receiving device have stored original data whose SNs=0 and 1, and a standby buffer of the sending device has stored original data whose SNs=2 and 3. The case in FIG. 5 may occur when the sending device has sent the original data whose SNs=0, 1, 2, and 3 to the receiving device, the sending device has received, from the receiving device, a physical layer feedback (corresponding to FIG. 4A) or a MAC layer feedback (corresponding to FIG. 4B) corresponding to the original data whose SNs=0 and 1, and the sending device has indicated, by using a UDC header, the receiving device to update a formal buffer. Because the sending device has not received, from the receiving device, a physical layer feedback or a MAC layer feedback of the original data whose SNs=2 and 3, the original data whose SNs=2 and 3 is still placed in the standby buffer of the sending device and a standby buffer of the receiving device.

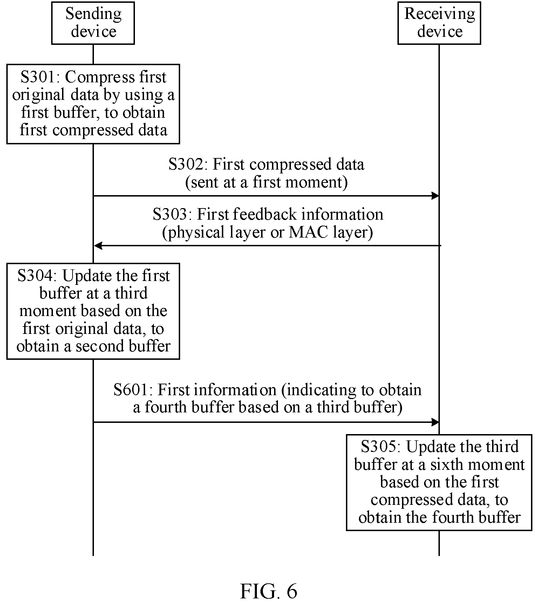

It is assumed that FIG. 5 is applied to the data receiving and sending process shown in FIG. 4A. In this case, if the sending device receives an ACK of a physical layer from the receiving device, and a TB corresponding to a HARQ process corresponding to the ACK carries the original data whose SN=2, a physical layer of the sending device may notify a PDCP layer of the sending device that the original data whose SN=2 has been successfully received. In this case, the PDCP layer may add an update indication to a UDC header of sent new original data (for example, original data whose SN=4), to indicate the receiving device to update the formal buffer. It is assumed that FIG. 5 is applied to the data receiving and sending process shown in FIG. 4B. In this case, if the sending device receives an ACK from a MAC layer of the receiving device, and an MPDU corresponding to the ACK carries the original data whose SN=2, a physical layer of the sending device may notify a UDC layer of the sending device that the original data whose SN=2 has been successfully received. In this case, the UDC layer may add an update indication to a UDC header of sent new original data (for example, original data whose SN=4), to indicate the receiving device to update the formal buffer. Optionally, the sending device and the receiving device may update the formal buffer by using different implementation mechanisms. The following describes the implementation mechanisms by using examples.
1. First implementation mechanism. FIG. 6 is a flowchart of the implementation mechanism.

S601: The sending device sends first information to the receiving device at a fourth moment. Correspondingly, the receiving device receives the first information from the sending device at the fourth moment.

In the first implementation mechanism, after performing S304, the sending device may perform S601. The first information includes first indication information. The first indication information indicates the receiving device to update the third buffer. The fourth moment is later than the second moment.

The first information further includes second indication information, the second indication information indicates second compressed data, and the second compressed data is generated based on the second buffer. To be specific, after performing S304, the sending device may continue to compress a next piece of original data by using the second buffer. For example, the next piece of original data is second original data, and data obtained by compressing the second original data is referred to as second compressed data. The sending device may send the second compressed data to the receiving device. For example, the first information may be a data packet including the second compressed data. Optionally, the second indication information includes, for example, an SN of the second compressed data. To be specific, the sending device may include the first indication information to a data packet including a next piece of compressed data, to indicate the receiving device to update the formal buffer, without separately sending the first indication information, effectively improving utilization of the first information. How the first indication information indicates the receiving device to update the formal buffer is described below.

After S601, the receiving device may perform S305. To be specific, after receiving the first information, the receiving device may update the third buffer based on an indication of the first indication information, to obtain the fourth buffer.

The example in FIG. 5 is still used. For example, if the first feedback information indicates that the original data whose SN=2 has been successfully received, the sending device may extract the original data whose SN=2 from the standby buffer in S304, and add the original data to the first buffer, to obtain the second buffer. In this case, the second buffer includes the original data whose SNs=0, 1, and 2. The sending device compresses the original data whose SN=4 by using the second buffer, to obtain compressed data whose SN=4, and then sends the compressed data whose SN=4 to the receiving device by using the first information. The first information includes the second indication information and the first indication information. The second indication information includes, for example, the SN of the compressed data whose SN=4, and the first indication information may indicate the receiving device to update the formal buffer. After receiving the first information, the receiving device may extract the original data whose SN=2 from the standby buffer (that is, after decompressing the compressed data whose SN=2, the receiving device does not directly add the original data whose SN=2 to the formal buffer, but places the original data in the standby buffer), and add the original data to the third buffer to obtain the fourth buffer, where the fourth buffer may include the original data whose SNs=0, 1, and 2. The receiving device decompresses the compressed data whose SN=4 by using the fourth buffer, to obtain the original data whose SN=4.

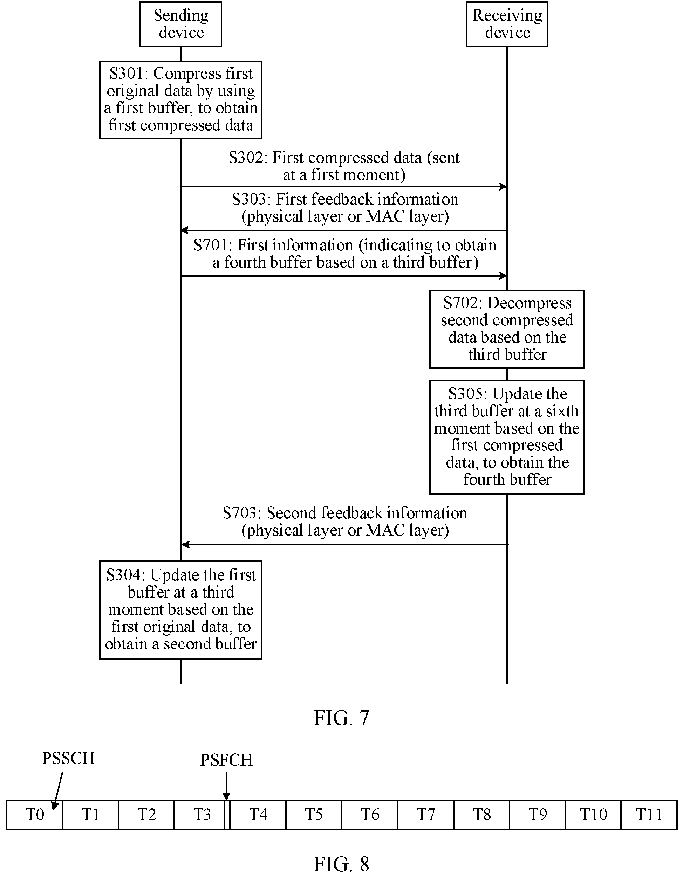

2. Second implementation mechanism. FIG. 7 is a flowchart of the implementation mechanism.

S701: The sending device sends first information to the receiving device at a fourth moment. Correspondingly, the receiving device receives the first information from the sending device at the fourth moment.

In the second implementation mechanism, after performing S303, the sending device temporarily does not perform S304, but may perform S701. The first information includes first indication information. For content indicated by the first indication information, refer to the foregoing description. The fourth moment is later than the second moment.

The first information further includes second indication information, and the second indication information indicates second compressed data. In the second implementation mechanism, the second compressed data is generated based on the first buffer. To be specific, after receiving the first feedback information in S303, the sending device may continue to compress a next piece of original data by using the first buffer. For example, the next piece of original data is second original data, and data obtained by compressing the second original data is referred to as second compressed data. The sending device may send the second compressed data to the receiving device. For example, the first information may be a data packet including the second compressed data. Optionally, the second indication information includes, for example, an SN of the second compressed data. To be specific, the sending device may include the first indication information to a data packet including a next piece of compressed data, to indicate the receiving device to update the formal buffer, without separately sending the first indication information, effectively improving utilization of the first information. How the first indication information indicates the receiving device to update the formal buffer is described below.

S702: The receiving device decompresses the second compressed data based on the third buffer.

If the receiving device successfully receives the first information, although the first information indicates the receiving device to update the formal buffer, the receiving device decompresses, by using the third buffer before updating the third buffer, the second compressed data carried in the first information.

After S702, that is, after the receiving device decompresses the second compressed data based on the third buffer, the receiving device may perform S305.

S703: The receiving device sends second feedback information to the sending device at a fifth moment. Correspondingly, the sending device receives the second feedback information from the receiving device at the fifth moment. The fifth moment may be later than the fourth moment. The second feedback information may indicate whether the first information is successfully received or fails to be received. For example, if a value of the second feedback information is a first value, it indicates that the first information is successfully received; or if a value of the second feedback information is a second value, it indicates that the first information fails to be received. For more implementations of the second feedback information, refer to the foregoing description of the first feedback information.

If the second feedback information indicates that the first information is successfully received, the sending device may perform S304.

The example in FIG. 5 is still used. For example, if the first feedback information indicates that the original data whose SN=2 has been successfully received, the sending device continues to compress the original data whose SN=4 by using the first buffer (the first buffer may include the original data whose SNs=0 and 1), to obtain compressed data whose SN=4, and then sends the compressed data whose SN=4 to the receiving device by using the first information. The first information may include the second indication information and the first indication information. The second indication information includes, for example, the SN of the compressed data whose SN=4, and the first indication information may indicate the receiving device to update the formal buffer. After receiving the first information, the receiving device may decompress, by using the third buffer (the third buffer may include the original data whose SNs=0 and 1), the compressed data whose SN=4 carried in the first information, to obtain the original data whose SN=4. After the decompression, the receiving device may update the third buffer by using the original data whose SN=2. For example, the receiving device extracts the original data whose SN=2 from the standby buffer, and places the original data in the third buffer, where an obtained buffer is the fourth buffer, and the fourth buffer may include the original data whose SNs=0, 1, and 2. The receiving device sends the second feedback information to the sending device, to indicate that the compressed data whose SN=4 is successfully received. After receiving the second feedback information, the sending device may update the first buffer by using the original data whose SN=2. For example, the sending device extracts the original data whose SN=2 from the standby buffer, and places the original data in the first buffer, where an obtained buffer is the second buffer, and the second buffer may include the original data whose SNs=0, 1, and 2.

In an actual communication system, a moment at which the receiving device sends a physical layer feedback (or a MAC layer feedback) is usually later than a moment at which the receiving device receives compressed data. Therefore, for the foregoing second implementation mechanism, occasions for updating the formal buffers by the receiving device and the sending device may be inconsistent. An SL scenario in which both the sending device and the receiving device are UEs is used as an example. The sending device sends the compressed data whose SN=4 to the receiving device on a physical sidelink shared channel (physical sidelink shared channel, PSSCH) in a slot T0 in FIG. 8. A header of a data packet that carries the compressed data indicates to update the original data whose SN=2 to the formal buffer. The receiving device needs to send, to the sending device, a HARQ feedback of the compressed data whose SN=4. However, the HARQ feedback needs to be transmitted at an interval of at least two slots. For example, the HARQ feedback can be sent at least on a physical sidelink feedback channel (physical sidelink feedback channel, PSFCH) in a slot T3. Therefore, the sending device can update the formal buffer at least in the slot T3. However, the receiving device may be able to update the formal buffer in a slot T1 or a slot T2. It can be learned that occasions for updating the formal buffers by the receiving device and the sending device are inconsistent. Consequently, the formal buffers of the two ends cannot be aligned, and a decompression failure may be caused.

Therefore, optionally, in the second implementation mechanism, after receiving information that indicates to update a buffer, the receiving device may wait first duration before updating a formal buffer. Correspondingly, after receiving information (for example, the second feedback information) indicating that new compressed data is successfully received, the sending device may also wait the first duration before updating the formal buffer. A unit of the first duration is, for example, a subframe, a slot, an OFDM symbol, or a millisecond.

Optionally, a timer may be configured for each of the sending device and the receiving device. For example, the timer of the sending device is referred to as a first timer, and the timer of the receiving device is referred to as a second timer. Timing duration of the first timer may be equal to timing duration of the second timer. The timing duration is, for example, the first duration. An end moment of the first duration is, for example, the third moment, and a start moment of the first duration is, for example, the fourth moment or the fifth moment. It may be understood that due to existence of the first duration, the third moment may be later than or equal to a moment obtained by adding the first duration to the fourth moment, or the third moment may be later than or equal to a moment obtained by adding the first duration to the fifth moment. If the end moment of the first duration is the third moment, and the start moment of the first duration is the fourth moment, for the receiving device, the first duration may indicate a delay between a moment at which the receiving device receives the first indication information and a moment at which the first indication information actually takes effect (that is, the receiving device updates the third buffer). Alternatively, if the end moment of the first duration is the third moment, and the start moment of the first duration is the fifth moment, for the receiving device, the first duration may indicate a delay between a moment at which the receiving device sends, to the sending device, a physical layer feedback or a MAC layer feedback corresponding to a transmission packet (for example, a TB or an MPDU) that carries the first indication information and a moment at which the first indication information actually takes effect.

The first duration may be configured by the sending device and notified to the receiving device, or may be configured by the receiving device and notified to the sending device, or may be predefined in a protocol, or may be preconfigured in the sending device and the receiving device. That the first duration is configured by the sending device and notified to the receiving device is used as an example. For example, the sending device may send second information to the receiving device, and the second information may indicate the first duration. The second information may be sent in a semi-static manner. For example, the second information may be carried in a radio resource control (radio resource control, RRC) message. The second information may be valid in second duration, where the second duration is, for example, greater than or equal to the first duration; or the second information may be valid in one or more slots; or the second information may be valid in one or more OFDM symbols. Alternatively, the second information may be sent in another manner. For example, the second information may be sent by using signaling such as a MAC control element (control element, CE).

For example, the start moment of the first duration is the fourth moment, and the end moment of the first duration is the third moment. For example, the first duration is five slots. Still refer to FIG. 8. The sending device indicates, in the slot T1 by using the header of the data packet that carries the compressed data whose SN=4, the receiving device to update the original data whose SN=2 to the formal buffer. In this case, a start moment of the slot T1 is the fourth moment. After receiving the indication, the receiving device does not update the formal buffer immediately, but waits five slots before updating the formal buffer. Optionally, starting from the slot T1, the receiving device may update the formal buffer when a 5^{th} slot (a slot T5) arrives. For example, the receiving device may update the formal buffer when a last OFDM symbol in the slot T5 ends, or may update the formal buffer at a start time domain position of a 1^{st} OFDM symbol in a slot T6. In this case, an end time domain position of the last OFDM symbol in the slot T5 or the start time domain position of the 1^{st} OFDM symbol in the slot T6 is the third moment. Alternatively, because the receiving device receives the indication at last several OFDM symbols of the slot T1, starting from a next slot of the slot T1 (namely, the slot T2), the receiving device may update the formal buffer when a 5^{th} slot (a slot T6) arrives. For example, the receiving device may update the formal buffer when a last OFDM symbol of the T6 slot ends, or may update the formal buffer at a start time domain position of a 1^{st} OFDM symbol of a slot T7. A mechanism of updating the formal buffer by the sending device is similar to that of the receiving device.

Alternatively, for example, the start moment of the first duration is the fifth moment, and the end moment of the first duration is the third moment. For example, the first duration is five slots. Still refer to FIG. 8. The sending device indicates, in the slot T1 by using the header of the data packet that carries the compressed data whose SN=4, the receiving device to update the original data whose SN=2 to the formal buffer. After receiving the data packet, the receiving device may send a physical layer feedback or a MAC layer feedback to the sending device in the slot T4, to indicate that the data packet is successfully received. In addition, the receiving device does not update the formal buffer immediately, but waits five slots before updating the formal buffer. Optionally, starting from the slot T4, the receiving device may update the formal buffer when a 5^{th} slot (a slot T8) arrives. For example, the receiving device may update the formal buffer when a last OFDM symbol of the slot T8 ends, or may update the formal buffer at a start time domain position of a 1^{st} OFDM symbol of a slot T9. A mechanism of updating the formal buffer by the sending device is similar to that of the receiving device.

In either of the foregoing two examples, if the sending device sends a piece of compressed data in the slot T3, the compressed data needs to be compressed by using a to-be-updated formal buffer, and the receiving device needs to decompress the compressed data by using a to-be-updated formal buffer. It can be learned that, because the occasions for updating the formal buffers of the receiving end and the transmitting end are aligned, the formal buffers of the receiving end and the transmitting end may be consistent. This helps improve a success rate of compression and decompression.

As described above, the first indication information may indicate the receiving device to update the formal buffer. Optionally, in an indication manner of the first indication information, the first indication information may indicate the first compressed data, to indirectly indicate the receiving device to update the formal buffer based on the first compressed data. The first indication information may indicate the first compressed data in a plurality of different indication manners. The following describes some optional manners by using examples.

A. First indication manner. The first indication information may indicate a sequence number of the first compressed data, for example, an SN of the first compressed data.

In an optional manner in which the first indication information indicates the sequence number of the first compressed data, the first indication information includes the sequence number of the first compressed data. If the first compressed data includes a plurality of pieces of compressed data, that the first indication information includes the sequence number of the first compressed data may indicate that the first indication information includes sequence numbers of some or all of the plurality of pieces of compressed data.

There may also be various manners in which the first indication information includes the sequence number of the first compressed data. The following describes a manner in which the first indication information includes the sequence number of the first compressed data by using an example in which the first indication information is included in a UDC header of the first information.

A1. The first indication information includes sequence numbers of all pieces of compressed data in the first compressed data. The first compressed data may include one or more pieces of compressed data, and the first indication information may include sequence numbers of all the pieces of compressed data. This indication manner is clear, in which the receiving device may directly obtain the sequence numbers of all the pieces of compressed data included in the first compressed data.

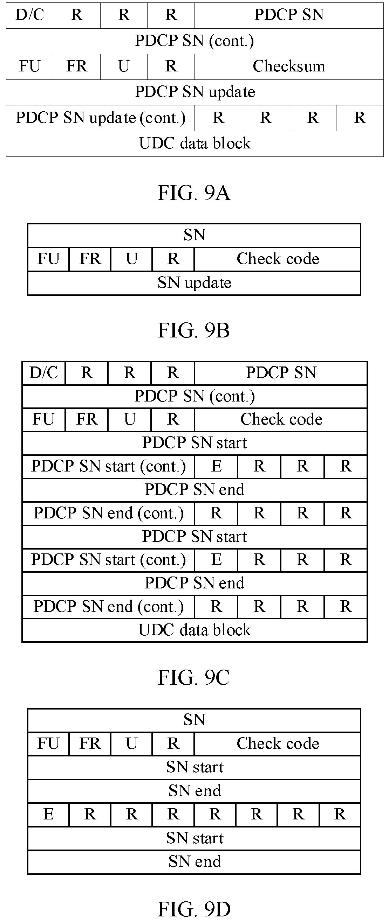

FIG. 9A is a diagram of a PDCP header and a UDC header. The UDC header may be included in the first information, and the UDC header may include the first indication information. Compared with the UDC header shown in FIG. 1A, the UDC header in FIG. 9A has newly added fields. For example, the newly added fields are collectively referred to as a first field. The first field may include at least one field, and the first field may be used to carry the first indication information. In this embodiment of this application, one field is used to carry one piece of information, which may also be described as that the field includes the information. For example, the first field is used to carry a sequence number of compressed data, which may also be described as that the first field includes the sequence number of the compressed data. In FIG. 9A, an SL scenario in which both the sending device and the receiving device are UEs is used as an example.

For example, the first field includes a field shown by "PDCP SN update (update)" in FIG. 9A, and the PDCP SN update field may be used to carry the sequence numbers of all the pieces of compressed data included in the first compressed data. A length of the PDCP SN update field in FIG. 9A is merely an example. In actual application, the length of the PDCP SN update field may be extended based on lengths of the sequence numbers of all the pieces of compressed data included in the first compressed data.

Optionally, the first field may further include a first indication field. The first indication field is, for example, a "U" field in the UDC header in FIG. 9A. The U field may indicate whether to update the formal buffer. To be specific, the first information may indicate, by using the U field, whether to update the formal buffer. If the U field indicates to update the formal buffer, the PDCP SN update field is used to indicate compressed data through which the formal buffer is updated. For example, if a value of the U field is "1", it indicates to update the formal buffer; or if the value of the U field is "0", it indicates not to update the formal buffer. If the U field indicates to update the formal buffer, PDCP SN update may carry a PDCP SN of compressed data used to update the formal buffer. If the U field indicates not to update the formal buffer, PDCP SN update may be empty, or the PDCP SN update field may not exist, to reduce overheads of the UDC header.

Alternatively, the U field may not exist. If the PDCP SN update field carries a PDCP SN, it indicates to update the formal buffer based on the compressed data corresponding to the PDCP SN. If the PDCP SN update field does not carry a PDCP SN (for example, the PDCP SN update field is empty), or the PDCP SN update field does not exist, it indicates not to update the formal buffer.

In addition, the PDCP header in FIG. 9A includes a PDCP SN field that is used to carry a PDCP SN of compressed data newly sent this time. For explanations of other fields shown in FIG. 9A, refer to the foregoing descriptions of FIG. 1A.

For example, when the sending device needs to indicate, by using the UDC header of the data packet that carries the compressed data whose SN=4, the receiving device to update the formal buffer based on the compressed data whose SN=2, the PDCP SN field in FIG. 9A may carry SN=4, the value of the U field is "1", and the PDCP SN update field may carry SN=2.

FIG. 9B is a diagram of another UDC header. The UDC header may be included in the first information, and the UDC header may carry the first indication information. New fields are added to the UDC header in FIG. 9B. For example, the newly added fields are collectively referred to as a first field. The first field may include at least one field, and the first field may be used to carry the first indication information. In FIG. 9B, a Wi-Fi scenario in which the sending device is a STA and the receiving device is an AP is used as an example.

For example, the first field includes a field shown by "SN update" in FIG. 9B, and the SN update field may be used to carry the sequence numbers of all the pieces of compressed data included in the first compressed data. A length of the SN update field in FIG. 9B is merely an example. In actual application, the length of the SN update field may be extended based on lengths of the sequence numbers of all the pieces of compressed data included in the first compressed data.

Optionally, the first field may further include a first indication field, for example, a "U" field in the UDC header in FIG. 9B. For a description of the U field, refer to the foregoing description.

In addition, the PDCP header in FIG. 9B includes an SN field that is used to carry an SN of compressed data newly sent this time. For explanations of other fields shown in FIG. 9B, refer to the foregoing descriptions of FIG. 1A or FIG. 9A.

For example, when the sending device needs to indicate, by using the UDC header of the data packet that carries the compressed data whose SN=4, the receiving device to update the formal buffer based on the compressed data whose SN=2, the SN field in FIG. 9B may carry SN=4, the value of the U field is "1", and the SN update field may carry SN=2.

A2. The first indication information includes a sequence number of a last piece of compressed data in the first compressed data. For example, if the first compressed data includes M pieces of compressed data, the first indication information may include a sequence number of a last piece of compressed data in the M pieces of compressed data, and M is a positive integer. The last piece of compressed data in the M pieces of compressed data is a last piece of compressed data that is in the M pieces of compressed data and that is sorted by sequence number.

An SL scenario in which both the sending device and the receiving device are UEs is used as an example. Still refer to FIG. 9A. Different from the manner A1, in the manner A2, the PDCP SN update field in FIG. 9A does not carry the sequence numbers of all the pieces of compressed data included in the first compressed data, but carries the sequence number of the last piece of compressed data in the M pieces of compressed data, in other words, PDCP SN update carries only one PDCP SN. In this way, overheads of the UDC header can be effectively reduced. For more descriptions (for example, the U field and the PDCP header) of the manner A2, refer to the manner A1.

For example, when the sending device needs to indicate, by using the UDC header of the data packet that carries the compressed data whose SN=4, the receiving device to update the formal buffer based on the compressed data whose SNs=2 and 3, the PDCP SN field in FIG. 9A may carry SN=4, the value of the U field is "1", and the PDCP SN update field may carry SN=3. In this case, original data that may be included in the formal buffer of the receiving device is the original data whose SNs=0 and 1, and the receiving device may update the original data whose SNs=2 and 3 to the formal buffer based on the indication of the UDC header.

A Wi-Fi scenario in which the sending device is a STA and the receiving device is an AP is used as an example. Still refer to FIG. 9B. Different from the manner A1, in the manner A2, the SN update field in FIG. 9B does not carry the sequence numbers of all the pieces of compressed data included in the first compressed data, but carries the sequence number of the last piece of compressed data in the M pieces of compressed data, in other words, the SN update carries only one SN. In this way, overheads of the UDC header can be effectively reduced. For more descriptions (for example, the U field and the PDCP header) of the manner A2, refer to the manner A1.

For example, when the sending device needs to indicate, by using the UDC header of the data packet that carries the compressed data whose SN=4, the receiving device to update the formal buffer based on the compressed data whose SNs=2 and 3, the SN field in FIG. 9B may carry SN=4, the value of the U field is "1", and the SN update field may carry SN=3. In this case, original data that may be included in the formal buffer of the receiving device is the original data whose SNs=0 and 1, and the receiving device may update the original data whose SNs=2 and 3 to the formal buffer based on the indication of the UDC header.

A3. The first compressed data includes M pieces of compressed data, the M pieces of compressed data belong to K groups, and the first indication information includes a sequence number of a 1^{st} piece of compressed data in each of the K groups and a sequence number of a last piece of compressed data in each of the K groups. K is a positive integer. A 1^{st} piece of compressed data in a group of compressed data is a 1^{st} piece of compressed data that is in the group of compressed data and that is sorted by sequence number. A last piece of compressed data in a group of compressed data is a last piece of compressed data that is in the group of compressed data and that is sorted by sequence number.

For example, a first field is added to the UDC header, the first field includes K groups of fields, and the K groups of fields may carry the first indication information. For example, one group of fields may carry sequence numbers of one group of compressed data. A group of fields in the K groups of fields may include a start field and an end field. The start field may carry a sequence number of a 1^{st} piece of compressed data in a group of compressed data, and the end field may carry a sequence number of a last piece of compressed data in the group of compressed data. If K=1, the first field includes only one group of fields. For example, if sequence numbers of at least two adjacent compressed fields in the M compressed fields are inconsecutive, the manner A1 or the manner A3 may be used. If the manner A3 is used, overheads of the UDC header can be reduced in comparison with the manner A1.

FIG. 9C is a diagram of a PDCP header and a UDC header. The UDC header may be included in the first information, and the UDC header may carry the first indication information. In FIG. 9C, an SL scenario in which both the sending device and the receiving device are UEs is used as an example. In FIG. 9C, an example in which the first compressed data includes two groups of compressed data is used. Therefore, an example in which a first field includes two groups of fields is also used. For example, a first group of fields in the first field includes a 1^{st} PDCP SN start (start) field from top to bottom and a 1^{st} PDCP SN end (end) field from top to bottom. A second group of fields in the first field includes a 2^{nd} PDCP SN start field from top to bottom and a 2^{nd} PDCP SN end field from top to bottom. The first group of fields is used as an example. Optionally, the first group of fields may further include a second indication field. The second indication field is, for example, located between the PDCP SN start field and the PDCP SN end field, and includes, for example, an "E" field in FIG. 9C. The second indication field may indicate whether the UDC header further includes a sequence number of compressed data used to update the formal buffer, or indicate whether the UDC header further includes a next group of fields used to update the formal buffer. For example, if a value of the E field is "1", it indicates that the UDC header further includes the sequence number of the compressed data used to update the formal buffer, and the receiving device may continue decoding. If the value of the E field is "0", it indicates that the UDC header does not include the sequence number of the compressed data used to update the formal buffer, and the receiving device does not need to continue decoding. For example, if the two groups of fields in FIG. 9C both carry PDCP SNs, a value of an E field (namely, a 1^{st} E field from top to bottom) in the first group of fields may be "1", and a value of an E field (namely, a 2^{nd} E field from top to bottom) in the second group of fields may be "0". Content included in the second group of fields is similar, and details are not described again. If K=1, FIG. 9C may not include the second group of fields.

For example, if the sending device indicates, by using the UDC header of the first information, the receiving device to update compressed data whose SNs=4, 5, 6, 7, and 10 to the formal buffer, the first compressed data may include two groups of compressed data, where a first group of compressed data includes the compressed data whose SNs=4, 5, 6, and 7, and a second group of compressed data includes the compressed data whose SN=10. In this case, in FIG. 9C, the PDCP SN start field in the first group of fields may carry SN=4, the PDCP SN end field in the first group of fields may carry SN=7, and a value of the 1^{st} E field is "1". Therefore, the receiving device further continues to decode the UDC header. Both the PDCP SN start field and the PDCP SN end field in the second group of fields in FIG. 9C may carry SN=10, and a value of the 2^{nd} E field is "0".

FIG. 9D is a diagram of another UDC header. The UDC header may be included in the first information, and the UDC header may carry the first indication information. In FIG. 9D, a Wi-Fi scenario in which the sending device is a STA and the receiving device is an AP is used as an example. In FIG. 9D, an example in which the first compressed data includes two groups of compressed data is used. Therefore, an example in which a first field includes two groups of fields is also used. For example, a first group of fields in the first field includes a 1^{st} SN start field from top to bottom and a 1^{st} SN end field from top to bottom. A second group of fields in the first field includes a 2^{nd} SN start field from top to bottom and a 2^{nd} SN end field from top to bottom. Optionally, the first field may further include a second indication field. The second indication field is, for example, located between the first group of fields and the second group of fields, and includes, for example, an "E" field in FIG. 9D. The second indication field may indicate whether the UDC header further includes a sequence number of compressed data used to update the formal buffer, or indicate whether the UDC header further includes a next group of fields used to update the formal buffer. For example, if a value of the E field is "1", it indicates that the UDC header further includes the sequence number of the compressed data used to update the formal buffer, and the receiving device may continue decoding. If the value of the E field is "0", it indicates that the UDC header does not include the sequence number of the compressed data used to update the formal buffer, and the receiving device does not need to continue decoding. For example, if the second group of fields in FIG. 9D also carries SNs, the value of the E field may be "1". If K=1, FIG. 9C may not include the second group of fields, and in this case, the value of the E field may be "0".

For example, if the sending device indicates, by using the UDC header of the first information, the receiving device to update compressed data whose SNs=4, 5, 6, 7, and 10 to the formal buffer, the first compressed data may include two groups of compressed data, where a first group of compressed data includes the compressed data whose SNs=4, 5, 6, and 7, and a second group of compressed data includes the compressed data whose SN=10. In this case, in FIG. 9D, the SN start field in the first group of fields may carry SN=4, the SN end field in the first group of fields may carry SN=7, and a value of a 1^{st} E field is "1". Therefore, the receiving device further continues to decode the UDC header. Both the SN start field and the SN end field in the second group of fields in FIG. 9D may carry SN=10, and a value of a 2^{nd} E field is "0".

It can be learned from FIG. 9C or FIG. 9D that there may be only one piece of compressed data in a group of compressed data included in the first compressed data. In this case, the first field may be improved, to reduce overheads of the UDC header. For example, the first field still includes K groups of fields, and a group of fields in the K groups of fields may include a start field and an end field. For this, refer to the foregoing description. However, the K groups of fields further include K₁ groups of fields (K₁ is a positive integer less than K). A group of fields in the K₁ groups of fields may include a sequence number field. The sequence number field may carry a sequence number of a group of compressed data that includes only one piece of compressed data. In other words, the sequence number field needs to carry a sequence number of only one piece of compressed data.

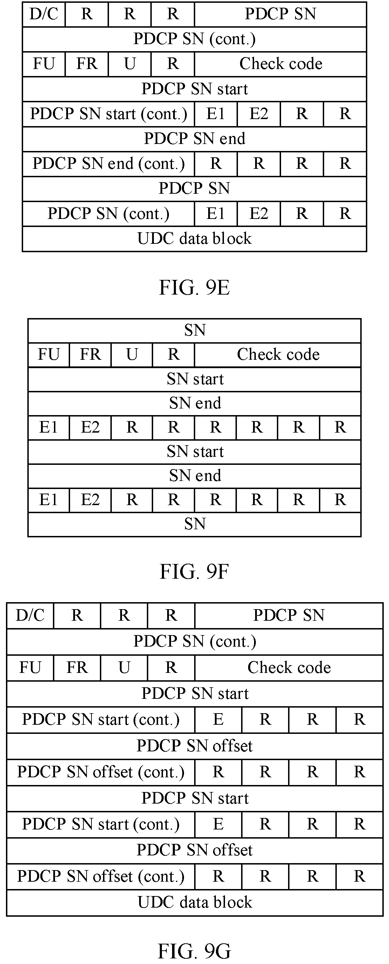

FIG. 9E is a diagram of a PDCP header and a UDC header. The UDC header may be included in the first information, and the UDC header may carry the first indication information. In FIG. 9E, an SL scenario in which both the sending device and the receiving device are UEs is used as an example. In FIG. 9E, an example in which the first compressed data includes two groups of compressed data is used. Therefore, an example in which a first field includes two groups of fields is also used. For example, a first group of fields in the first field includes a 1^{st} PDCP SN start field from top to bottom and a 1^{st} PDCP SN end field from top to bottom. Optionally, the group of fields may further include a third indication field, and the third indication field is, for example, located between the PDCP SN start field and the PDCP SN end field. Optionally, the third indication field may include a first indication subfield and a second indication subfield. The first indication subfield is, for example, a 1^{st} "E1" field from top to bottom in FIG. 9E, and the second indication subfield is, for example, a 1^{st} "E2" field from top to bottom in FIG. 9E. The first indication subfield may indicate whether the UDC header further includes sequence numbers of a group of compressed data used to update the formal buffer, or indicate whether the UDC header further includes a group of start fields and end fields. The second indication subfield may indicate whether the UDC header further includes a sequence number of a piece of compressed data used to update the formal buffer, or indicate whether the UDC header further includes a sequence number field. For example, if a value of the E1 field is "1", it indicates that the UDC header further includes a group of start fields and end fields; or if the value of the E1 field is "0", it indicates that the UDC header does not include a group of start fields and end fields. For example, if a value of the E2 field is "1", it indicates that the UDC header further includes a sequence number field; or if the value of the E2 field is "0", it indicates that the UDC header does not include a sequence number field. In other words, different groups of fields included in the first field in FIG. 9E may have different formats, and therefore may be separately indicated by different indication subfields. Optionally, a quantity of types of fields included in the first field may be equal to a quantity of indication subfields included in the third indication field. Alternatively, the E1 field and the E2 field may be replaced with the E field in FIG. 9C, to indicate whether the UDC header further includes a group of fields, without distinguishing a type of the group of fields.

In FIG. 9E, a second group of fields in the first field includes a 2^{nd} PDCP SN field from top to bottom. Optionally, the second group of fields may further include a fourth indication field, and the fourth indication field is, for example, located after the PDCP SN field. Optionally, the fourth indication field may include a third indication subfield and a fourth indication subfield. The third indication subfield is, for example, a 2^{nd} "E1" field from top to bottom in FIG. 9E, and the fourth indication subfield is, for example, a 2^{nd} "E2" field from top to bottom in FIG. 9E. For indication manners of these fields, refer to the foregoing description.

For example, if the sending device indicates, by using the UDC header of the first information, the receiving device to update compressed data whose SNs=4, 5, 6, 7, and 10 to the formal buffer, the first compressed data may include two groups of compressed data, where a first group of compressed data includes the compressed data whose SNs=4, 5, 6, and 7, and a second group of compressed data includes the compressed data whose SN=10. In this case, in FIG. 9C, the PDCP SN start field in the first group of fields may carry SN=4, the PDCP SN end field in the first group of fields may carry SN=7, the value of the 1^{st} E1 field is "0", and the value of the 1^{st} E2 field is "1". Therefore, the receiving device further continues to decode the UDC header. The PDCP SN field in the second group of fields in FIG. 9C may carry SN=10, and both a value of the 2^{nd} E1 field and a value of the 2^{nd} E2 field are "0".

FIG. 9F is a diagram of another UDC header. The UDC header may be included in the first information, and the UDC header may carry the first indication information. In FIG. 9F, a Wi-Fi scenario in which the sending device is a STA and the receiving device is an AP is used as an example. In FIG. 9F, an example in which the first compressed data includes three groups of compressed data is used. Therefore, an example in which a first field includes three groups of fields is also used. For example, a first group of fields in the first field includes a 1^{st} SN start field from top to bottom and a 1^{st} SN end field from top to bottom. A second group of fields in the first field includes a 2^{nd} SN start field from top to bottom and a 2^{nd} SN end field from top to bottom. A third group of fields in the first field includes a 2^{nd} SN field from top to bottom. Optionally, the first field may further include a third indication field. The third indication field includes, for example, a field located between the first group of fields and the second group of fields, and includes, for example, a 1^{st} "E1" field and a 1^{st} "E2" field from top to bottom in FIG. 9F. Optionally, the first field may further include a fourth indication field. The fourth indication field is, for example, located between the second group of fields and the third group of fields, and includes, for example, a 2^{nd} "E1" field and a 2^{nd} "E2" field from top to bottom in FIG. 9F. The third indication field indicates the second group of fields, and the fourth indication field indicates the third group of fields. For content such as an indication manner, refer to the description of FIG. 9E. It may be understood that, if the first field further includes more groups of fields, more indication fields may be further included. Details are not described again.

For example, if the sending device indicates, by using the UDC header of the first information, the receiving device to update compressed data whose SNs=4, 5, 7, 8, and 10 to the formal buffer, the first compressed data may include three groups of compressed data, where a first group of compressed data includes the compressed data whose SNs=4 and 5, a second group of compressed data includes the compressed data whose SNs=7 and 8, and a third group of compressed data includes the compressed data whose SN=10. In this case, in FIG. 9F, the SN start field in the first group of fields may carry SN=4, the SN end field in the first group of fields may carry SN=5, the value of the 1^{st} E1 field is "1", and the value of the 1^{st} E2 field is "0". Therefore, the receiving device further continues to decode the UDC header. The SN start field in the second group of fields may carry SN=7, the SN end field in the second group of fields may carry SN=8, the value of the 2^{nd} E1 field is "0", and the value of the 2^{nd} E2 field is "1". Therefore, the receiving device further continues to decode the UDC header. The SN field in the third group of fields may carry SN=10.

For the manner A3, types of fields included in the first field may be different (for example, the first field may include a start field and an end field, and further include a sequence number field). Therefore, optionally, the first indication field may indicate a type of the first group of fields included in the first field. For example, the first indication field may include a U field and an R field in FIG. 9E or FIG. 9F. In other words, the two fields are combined as the first indication field. For example, if a value of the first indication field is "00", it indicates that the first group of fields does not exist, and the receiving device does not need to continue decoding. If the value of the first indication field is "01", it indicates that a type of the first group of fields is a start field and an end field. If the value of the first indication field is "10", it indicates that a type of the first group of fields is a sequence number field. In other words, the first indication field may be used to indicate whether the first group of fields exists, or may be used to indicate a type of the first group of fields, so that the indication manner is more flexible. In another manner, if the first field also includes a plurality of types of fields, a similar implementation may also be used for the first indication field. This is not limited.

A4. The first compressed data includes M pieces of compressed data, the M pieces of compressed data belong to K groups, and the first indication information includes a sequence number of a 1^{st} piece of compressed data that is in each of the K groups and that is sorted by sequence number, and includes an offset between the 1^{st} piece of compressed data and a last piece of compressed data that is in each of the K groups and that is sorted based on the sequence numbers. K is a positive integer. In this embodiment of this application, and the two features may be replaced with each other. Details are not described below.

For example, a first field is added to the UDC header, the first field includes K groups of fields, and the K groups of fields may carry the first indication information. A group of fields in the K groups of fields may include a start field and an offset field. The start field may carry a sequence number of a 1^{st} piece of compressed data in a group of compressed data, and the offset field may carry an offset between a last piece of compressed data in a group of compressed data and a 1^{st} piece of compressed data in the group of compressed data. For example, if sequence numbers of at least two adjacent compressed fields in the M compressed fields are inconsecutive, the manner A1, the manner A3, or the manner A4 may be used. If the manner A3 or the manner A4 is used, overheads of the UDC header can be reduced in comparison with the manner A1. If the manner A4 is used, overheads of the UDC header can be further reduced in comparison with the manner A3.

FIG. 9G is a diagram of a PDCP header and a UDC header. The UDC header may be included in the first information, and the UDC header may carry the first indication information. In FIG. 9G, an SL scenario in which both the sending device and the receiving device are UEs is used as an example. In FIG. 9G, an example in which the first compressed data includes two groups of compressed data is used. Therefore, an example in which a first field includes two groups of fields is also used. For example, a first group of fields in the first field includes a 1^{st} PDCP SN start field from top to bottom and a 1^{st} PDCP SN offset (offset) field from top to bottom. A second group of fields in the first field includes a 2^{nd} PDCP SN start field from top to bottom and a 2^{nd} PDCP SN offset field from top to bottom. The first group of fields is used as an example. Optionally, the group of fields may further include a fifth indication field. The fifth indication field is, for example, located between the PDCP SN start field and the PDCP SN offset field, and includes, for example, an "E" field in FIG. 9G. For the fifth indication field, refer to the foregoing description of the first indication field. Content included in the second group of fields is similar, and details are not described again. For example, if the two groups of fields in FIG. 9G both carry PDCP SNs, a value of an E field (namely, a 1^{st} E field from top to bottom) in the first group of fields may be "1", and a value of an E field (namely, a 1^{st} E field from top to bottom) in the second group of fields may be "0".

For example, if the sending device indicates, by using the UDC header of the first information, the receiving device to update compressed data whose SNs=4, 5, 6, 7, and 10 to the formal buffer, the first compressed data may include two groups of compressed data, where a first group of compressed data includes the compressed data whose SNs=4, 5, 6, and 7, and a second group of compressed data includes the compressed data whose SN=10. In this case, in FIG. 9G, the PDCP SN start field in the first group of fields may carry SN=4, the PDCP SN offset field in the first group of fields may carry 3, and a value of a 1^{st} E field is "1". Therefore, the receiving device further continues to decode the UDC header. The PDCP SN start field in the second group of fields may carry SN=10, the PDCP SN offset field in the second group of fields may carry 0, and a value of a 2^{nd} E field is "0".

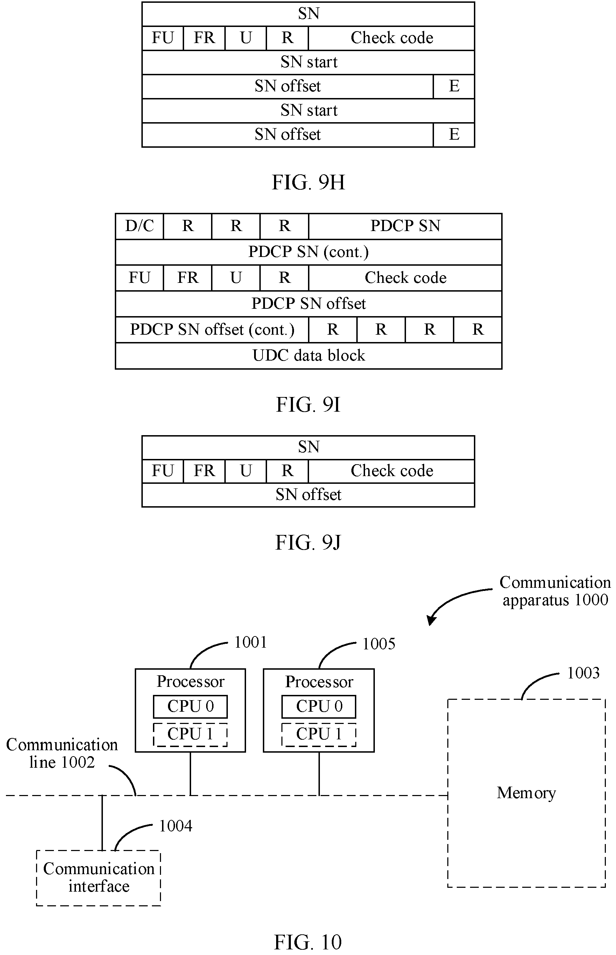

FIG. 9H is a diagram of another UDC header. The UDC header may be included in the first information, and the UDC header may carry the first indication information. In FIG. 9H, a Wi-Fi scenario in which the sending device is a STA and the receiving device is an AP is used as an example. In FIG. 9H, an example in which the first compressed data includes two groups of compressed data is used. Therefore, an example in which a first field includes two groups of fields is also used. For example, a first group of fields in the first field includes a 1^{st} SN start field from top to bottom and a 1^{st} SN offset field from top to bottom. A second group of fields in the first field includes a 2^{nd} SN start field from top to bottom and a 2^{nd} SN offset field from top to bottom. Optionally, the first field may further include a sixth indication field. The sixth indication field is, for example, located between the first group of fields and the second group of fields, and includes, for example, a 1^{st} "E" field from top to bottom in FIG. 9H. In addition, the first field may further include a seventh indication field. The seventh indication field is, for example, located between the second group of fields and a third group of fields, and includes, for example, a 2^{nd} "E" field from top to bottom in FIG. 9H. The sixth indication field indicates the second group of fields, and the seventh indication field indicates the third group of fields. For content such as indication manners of these fields, refer to the foregoing description.

For example, if the sending device indicates, by using the UDC header of the first information, the receiving device to update compressed data whose SNs=4, 5, 6, 7, and 10 to the formal buffer, the first compressed data may include two groups of compressed data, where a first group of compressed data includes the compressed data whose SNs=4, 5, 6, and 7, and a second group of compressed data includes the compressed data whose SN=10. In this case, in FIG. 9H, the SN start field in the first group of fields may carry SN=4, the SN offset field in the first group of fields may carry 3, and a value of the 1^{st} E field is "1". Therefore, the receiving device further continues to decode the UDC header. The SN start field in the second group of fields may carry SN=10, the SN offset field in the second group of fields may carry 0, and a value of the 2^{nd} E field is "0". Therefore, the receiving device stops decoding the UDC header.

Optionally, in the manner A4, the first field may further include a field used to carry a single SN. For example, FIG. 9G may be extended to further include a sequence number field used to carry a single SN. For example, the PDCP SN end field in FIG. 9E may be replaced with a PDCP SN offset field. Similarly, FIG. 9H may be extended to further include a sequence number field used to carry a single SN. For example, the SN end field in FIG. 9F may be replaced with an SN offset field.

Alternatively, in the manner A4, a group of fields in the K groups of fields may include an offset field and an end field. The offset field may carry an offset between a 1^{st} piece of compressed data in a group of compressed data and a last piece of compressed data in the group of compressed data, and the end field may carry a sequence number of a last piece of compressed data in a group of compressed data. Details are not described again.

A5. The first compressed data includes M pieces of compressed data, and the first indication information includes sequence numbers of a 1^{st} piece of compressed data and a last piece of compressed data that are in N pieces of compressed data and that are sorted by sequence number, and further includes sequence numbers of some or all of N-M pieces of compressed data. The sequence numbers of the N pieces of compressed data are consecutive, the N pieces of compressed data include the M pieces of compressed data, M is a positive integer less than or equal to N, and N is a positive integer.

For example, a first field is added to the UDC header, the first field includes K groups of fields, and the K groups of fields may carry the first indication information. An i^{th} group of fields in the K groups of fields may include a start field and an end field. The start field may carry the sequence number of the 1^{st} piece of compressed data in the N pieces of compressed data, and the end field may carry the sequence number of the last piece of compressed data in the N pieces of compressed data. Alternatively, an i^{th} group of fields in the K groups of fields may include a start field and an offset field. The start field may carry the sequence number of the 1^{st} piece of compressed data in the N pieces of compressed data, and the offset field may carry an offset between the last piece of compressed data and the 1^{st} piece of compressed data in the N pieces of compressed data. The i^{th} group of fields is, for example, a first group of fields in the K groups of fields, or may be any group of fields in the K groups of fields.

In addition, in addition to the i^{th} group of fields, the K groups of fields further include K-1 groups of fields. The K-1 groups of fields may indicate the N-M pieces of compressed data. For example, the K-1 groups of fields may carry sequence numbers of some or all of the N-M pieces of compressed data. For example, the N-M pieces of compressed data are further divided into H groups of compressed data based on continuity of sequence numbers, where H is a positive integer. In this case, the K-1 groups of fields carry sequence numbers of some or all of the H groups of compressed data. For a carrying manner, refer to any one of the manner A1 to the manner A4. In other words, the i^{th} group of fields indicates the N pieces of compressed data, and the K-1 groups of fields indicate the compressed data (namely, the N-M pieces of compressed data) that needs to be removed from the N pieces of compressed data. In this case, the N pieces of compressed data are indicated by the K groups of fields.

B. Second indication manner. The first indication information may indicate an offset of the first compressed data.

The first information further includes second indication information, the second indication information indicates second compressed data, and the second compressed data is, for example, compressed data that is newly sent to the receiving device this time. In this case, the offset that is of the first compressed data and indicated by the first indication information is, for example, an offset between a sequence number of the first compressed data and a sequence number of the second compressed data, or an offset between the sequence number of the first compressed data and a sequence number of a last piece of compressed data stored in a current UDC buffer (for example, the first buffer or the third buffer).

FIG. 9I is a diagram of a PDCP header and a UDC header. The UDC header may be included in the first information, and the UDC header may carry the first indication information and the second indication information. In FIG. 9I, an SL scenario in which both the sending device and the receiving device are UEs is used as an example. For example, a PDCP SN field in FIG. 9I is used to carry the second indication information, and the second indication information includes, for example, a PDCP SN of the second compressed data. A PDCP SN offset field in FIG. 9I may be used to carry the first indication information, and the first indication information includes, for example, an offset between a PDCP SN of the first compressed data and the PDCP SN of the second compressed data.

For example, when the sending device needs to indicate, by using the UDC header of the data packet that carries the compressed data whose SN=4, the receiving device to update the formal buffer based on the compressed data whose SN=1, the PDCP SN field in FIG. 9I may carry SN=4, a value of a U field is "1", and the PDCP SN offset field may carry SN=3 or SN=2. If PDCP SN offset carries SN=2, it indicates that PDCP SN of the first compressed data= PDCP SN of the second compressed data-2-1. In this case, if the offset is 0, it is also considered that "SN=1" needs to be subtracted. Other offsets in this embodiment of this application may also be processed similarly. For other content of FIG. 9I, refer to the description of FIG. 9A.

FIG. 9J is a diagram of another UDC header. The UDC header may be included in the first information, and the UDC header may carry the first indication information and the second indication information. In FIG. 9J, a Wi-Fi scenario in which the sending device is a STA and the receiving device is an AP is used as an example. For example, an SN field in FIG. 9J is used to carry the second indication information, and the second indication information includes, for example, an SN of the second compressed data. An SN offset field in FIG. 9J may be used to carry the first indication information, and the first indication information includes, for example, an offset between an SN of the first compressed data and the SN of the second compressed data.

For example, when the sending device needs to indicate, by using the UDC header of the data packet that carries the compressed data whose SN=4, the receiving device to update the formal buffer based on the compressed data whose SN=1, the PDCP SN field in FIG. 9J may carry SN=4, a value of a U field is "1", and the SN offset field may carry SN=3. For other content of FIG. 9J, refer to the description of FIG. 9B.

In addition to the foregoing manners, the first indication information may indicate the first compressed data in another manner. This is not limited in embodiments of this application.

In embodiments of this application, whether data corresponding to the UDC technology is successfully received or fails to be received can be fed back by using a feedback mechanism corresponding to the first feedback information, without introducing a feedback mechanism of another protocol layer (for example, a PDCP layer), reducing feedback resource overheads when ensuring transmission reliability. In addition, the sending device may indicate, in various manners, the compressed data used to update the formal buffer. This is flexible.

FIG. 10 is a diagram of a structure of a communication apparatus according to an embodiment of this application. The communication apparatus 1000 may be the sending device in the embodiment shown in any one of FIG. 3, FIG. 6, or FIG. 7 or a circuit system of the sending device, and is configured to implement the method corresponding to the sending device in the foregoing method embodiments. Alternatively, the communication apparatus 1000 may be the receiving device in the embodiment shown in any one of FIG. 3, FIG. 6, or FIG. 7 or a circuit system of the receiving device, and is configured to implement the method corresponding to the receiving device in the foregoing method embodiments. For specific functions, refer to descriptions of the foregoing method embodiments. For example, a circuit system is a chip system.

The communication apparatus 1000 includes at least one processor 1001. The processor 1001 may be configured to perform internal processing of the apparatus, to implement a specific control processing function. Optionally, the processor 1001 includes instructions. Optionally, the processor 1001 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 1000 includes one or more memories 1003, configured to store instructions. Optionally, the memory 1003 may further store data. The processor and the memory may be separately disposed, or may be integrated together.

Optionally, the communication apparatus 1000 includes a communication line 1002 and at least one communication interface 1004. The memory 1003, the communication line 1002, and the communication interface 1004 are all optional, and therefore are all represented by dashed lines in FIG. 10.

Optionally, the communication apparatus 1000 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement receiving and sending functions of the communication apparatus 1000 by using an antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 1001 may include a general-purpose central processing unit (central processing unit, CPU), a microprocessor, an application-specific integrated circuit (application-specific integrated circuit, ASIC), or one or more integrated circuits configured to control program execution in the solutions of this application.

The communication line 1002 may include a path for transmitting information between the foregoing components.

The communication interface 1004 may be any apparatus like a transceiver, and is configured to communicate with another device or a communication network, such as Ethernet, a radio access network (radio access network, RAN), a wireless local area network (wireless local area network, WLAN), or a wired access network.

The memory 1003 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile optical disc, a blue optical disc, and the like), a magnetic disk storage medium or another magnetic storage device, or any other medium that can carry or store expected program code in an instruction or data structure form and can be accessed by a computer, but is not limited thereto. The memory 1003 may exist alone, and is connected to the processor 1001 through the communication line 1002. Alternatively, the memory 1003 may be integrated with the processor 1001.

The memory 1003 is configured to store computer-executable instructions for executing the solutions of this application, and the processor 1001 controls the execution. The processor 1001 is configured to execute the computer-executable instructions stored in the memory 1003, to implement the steps performed by the sending device in the embodiment shown in any one of FIG. 3, FIG. 6, or FIG. 7, or implement the steps performed by the receiving device in the embodiment shown in any one of FIG. 3, FIG. 6, or FIG. 7.

Optionally, the computer-executable instructions in this embodiment of this application may also be referred to as application program code. This is not specifically limited in this embodiment of this application.

During specific implementation, in an embodiment, the processor 1001 may include one or more CPUs, such as a CPU 0 and a CPU 1 in FIG. 10.

During specific implementation, in an embodiment, the communication apparatus 1000 may include a plurality of processors such as the processor 1001 and a processor 1005 in FIG. 10. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 10 is a chip, for example, a chip of the sending device or a chip of the receiving device, the chip includes the processor 1001 (and may further include the processor 1005), the communication line 1002, the memory 1003, and the communication interface 1004. Specifically, the communication interface 1004 may be an input interface, a pin, a circuit, or the like. The memory 1003 may be a register, a buffer, or the like. The processor 1001 and the processor 1005 may be a general-purpose CPU, a microprocessor, an ASIC, or one or more integrated circuits configured to control program execution of the communication method in any one of the foregoing embodiments.

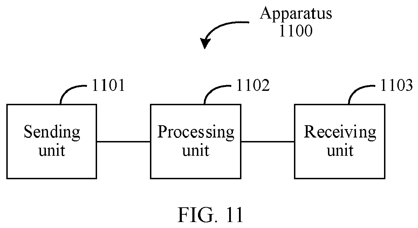

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when division into functional modules is performed based on corresponding functions, FIG. 11 is a diagram of an apparatus. The apparatus 1100 may be the sending device or the receiving device in the foregoing method embodiments, or a chip in the sending device or a chip in the receiving device. The apparatus 1100 includes a sending unit 1101, a processing unit 1102, and a receiving unit 1103.

It should be understood that the apparatus 1100 may be configured to implement the steps performed by the sending device or the receiving device in the communication method in embodiments of this application. For related features, refer to the embodiment shown in any one of FIG. 3, FIG. 6, or FIG. 7. Details are not described herein again.

Optionally, functions/implementation processes of the sending unit 1101, the receiving unit 1103, and the processing unit 1102 in FIG. 11 may be implemented by the processor 1001 in FIG. 10 by invoking the computer-executable instructions stored in the memory 1003. Alternatively, functions/implementation processes of the processing unit 1102 in FIG. 11 may be implemented by the processor 1001 in FIG. 10 by invoking the computer-executable instructions stored in the memory 1003, and functions/implementation processes of the sending unit 1101 and the receiving unit 1103 in FIG. 11 may be implemented through the communication interface 1004 in FIG. 10.

Optionally, when the apparatus 1100 is a chip or a circuit, functions/implementation processes of the sending unit 1101 and the receiving unit 1103 may alternatively be implemented by a pin, a circuit, or the like.

This application further provides a computer-readable storage medium. The computer-readable storage medium stores a computer program or instructions, and when the computer program or the instructions are run, the method performed by the sending device or the receiving device according to the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the sending device or the receiving device in any one of the foregoing method embodiments.

An embodiment of this application further provides a processing apparatus, including a processor and an interface. The processor is configured to perform the method performed by the sending device or the receiving device in any one of the foregoing method embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk, (solid state disk, SSD)), or the like.

Various illustrative logic units and circuits described in embodiments of this application may implement or operate the described functions by using a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic, a discrete hardware part, or a design of any combination of the foregoing devices. The general-purpose processor may be a microprocessor. Optionally, the general-purpose processor may also be any conventional processor, controller, microcontroller, or state machine. The processor may alternatively be implemented by a combination of computing apparatuses, such as a digital signal processor and a microprocessor, multiple microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor, so that the processor can read information from the storage medium and write information into the storage medium. Alternatively, the storage medium may be integrated into a processor. The processor and the storage medium may be disposed in an ASIC, and the ASIC may be disposed in a terminal device. Alternatively, the processor and the storage medium may be disposed in different parts of a terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or a logical conflict occurs, terms and/or descriptions in different embodiments are consistent and may be referenced to each other. Technical features in different embodiments may be combined to form a new embodiment based on an internal logical relationship of the technical features.

It may be understood that in embodiments of this application, the sending device and/or the receiving device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application need to be performed.

The scope of the invention is defined by the appended claims.

## Claims

1. A communication method, applied to a sending device or a chip in a sending device, wherein the method comprises:
compressing (S301) first original data by using a first buffer, to obtain first compressed data, wherein the first buffer is a buffer corresponding to an uplink data compression, UDC, technology;
sending (S302) the first compressed data to a receiving device at a first moment;
receiving (S303) first feedback information from the receiving device at a second moment, wherein the first feedback information indicates that the first compressed data is successfully received, and the first feedback information is physical layer feedback information or media access control, MAC, layer feedback information; and
updating (S304) the first buffer at a third moment based on the first original data in response to the first feedback information, to obtain a second buffer, wherein the second buffer comprises the first original data, wherein
the second moment is later than the first moment, and the third moment is later than the second moment;
wherein the method further comprises:
sending (S701) first information at a fourth moment, wherein the first information comprises first indication information, the first indication information indicates the receiving device to update a third buffer to obtain a fourth buffer, data comprised in the third buffer is the same as data comprised in the first buffer, data comprised in the fourth buffer is the same as data comprised in the second buffer, and the fourth moment is later than the second moment;
the communication method **characterised in that** the first information further comprises second indication information, the second indication information indicates second compressed data, and the second compressed data is generated based on the first buffer or the second buffer.

2. The method according to claim 1, wherein the method further comprises:
sending second information, wherein the second information indicates first duration, so that the third moment is equal to or later than a moment obtained by adding the first duration to the fourth moment, or the third moment is equal to or later than a moment obtained by adding the first duration to the fifth moment.

3. A communication method, applied to a receiving device or a chip in a receiving device, wherein the method comprises:
receiving (S302) first compressed data from a sending device at a first moment;
sending (S303) first feedback information to the sending device at a second moment, wherein the first feedback information indicates that the first compressed data is successfully received, and the first feedback information is physical layer feedback information or media access control, MAC, layer feedback information; and
updating (S305) a third buffer at a sixth moment based on the first compressed data, to obtain a fourth buffer, wherein the fourth buffer comprises first original data obtained by decompressing the first compressed data, and the third buffer is a buffer corresponding to uplink data compression, UDC, wherein
the second moment is later than the first moment, and the sixth moment is later than the second moment;
wherein the method further comprises:
receiving (S701) first information at a fourth moment, wherein the first information comprises first indication information, the first indication information indicates the receiving device to update the third buffer to obtain the fourth buffer, and the fourth moment is later than the second moment;
the communication method **characterised in that** the first information further comprises second indication information, the second indication information indicates second compressed data, and the second compressed data is generated based on a second buffer or a third buffer.

4. A communication apparatus (1000), comprising a processor (1001, 1005) and a memory (1003), wherein the memory is coupled to the processor, and the processor is configured to perform the method according to claim 1 or claim 2, or the method according to claim 3.

5. A computer-readable storage medium (1003), wherein the computer-readable storage medium is configured to store a computer program, and when the computer program is run by a device or a chip in a device, the method according to claim 1 or claim 2, or the method according to claim 3 is implemented.

6. A computer program product, wherein the computer program product comprises a computer program, and when the computer program is run by a device or a chip in a device, the method according to claim 1 or claim 2, or the method according to claim 3 is implemented.

## Patentansprüche

1. Kommunikationsverfahren, angewendet auf eine Sendevorrichtung oder einen Chip in einer Sendevorrichtung, wobei das Verfahren Folgendes umfasst:
Komprimieren (S301) erster Originaldaten unter Verwendung eines ersten Puffers, um erste komprimierte Daten zu erhalten, wobei der erste Puffer ein Puffer ist, der einer Uplink-Datenkomprimierungs-(UDC)-Technologie entspricht;
Senden (S302) der ersten komprimierten Daten zu einem ersten Zeitpunkt an eine Empfangsvorrichtung;
Empfangen (S303) erster Rückmeldeinformationen von der Empfangsvorrichtung zu einem zweiten Zeitpunkt, wobei die ersten Rückmeldeinformationen angeben, dass die ersten komprimierten Daten erfolgreich empfangen wurden, und die ersten Rückmeldeinformationen Rückmeldeinformationen einer physikalischen Schicht oder Rückmeldeinformationen einer Medienzugriffssteuerungs-(MAC)-Schicht sind; und
Aktualisieren (S304) des ersten Puffers zu einem dritten Zeitpunkt basierend auf den ersten Originaldaten als Reaktion auf die ersten Rückmeldeinformationen, um einen zweiten Puffer zu erhalten, wobei der zweite Puffer die ersten Originaldaten umfasst, wobei
der zweite Zeitpunkt später als der erste Zeitpunkt ist und der dritte Zeitpunkt später als der zweite Zeitpunkt ist;
wobei das Verfahren ferner Folgendes umfasst:
Senden (S701) erster Informationen zu einem vierten Zeitpunkt, wobei die ersten Informationen erste Anzeigeinformationen umfassen, die ersten Anzeigeinformationen die Empfangsvorrichtung angeben, einen dritten Puffer zu aktualisieren, um einen vierten Puffer zu erhalten, Daten, die in dem dritten Puffer enthalten sind, die gleichen wie Daten sind, die in dem vierten Puffer enthalten sind, die gleichen wie Daten sind, die in dem zweiten Puffer enthalten sind, und der vierte Zeitpunkt später als der zweite Zeitpunkt ist;
wobei das Kommunikationsverfahren **dadurch gekennzeichnet ist, dass** die ersten Informationen ferner zweite Anzeigeinformationen umfassen, die zweiten Anzeigeinformationen zweite komprimierte Daten angeben und die zweiten komprimierten Daten basierend auf dem ersten Puffer oder dem zweiten Puffer erzeugt werden.

2. Verfahren nach Anspruch 1, wobei das Verfahren ferner Folgendes umfasst:
Senden zweiter Informationen, wobei die zweiten Informationen eine erste Dauer angeben, so dass der dritte Zeitpunkt gleich oder später als ein Zeitpunkt ist, der durch Addieren der ersten Dauer zu dem vierten Zeitpunkt erhalten wird, oder der dritte Zeitpunkt gleich oder später als ein Zeitpunkt ist, der durch Addieren der ersten Dauer zu dem fünften Zeitpunkt erhalten wird.

3. Kommunikationsverfahren, angewendet auf eine Empfangsvorrichtung oder einen Chip in einer Empfangsvorrichtung, wobei das Verfahren Folgendes umfasst:
Empfangen (S302) erster komprimierter Daten von einer Sendevorrichtung zu einem ersten Zeitpunkt;
Senden (S303) erster Rückmeldeinformationen an die Sendevorrichtung zu einem zweiten Zeitpunkt, wobei die ersten Rückmeldeinformationen angeben, dass die ersten komprimierten Daten erfolgreich empfangen wurden, und die ersten Rückmeldeinformationen Rückmeldeinformationen einer physikalischen Schicht oder Rückmeldeinformationen einer Medienzugriffssteuerungs-(MAC)-Schicht sind; und
Aktualisieren (S305) eines dritten Puffers zu einem sechsten Zeitpunkt basierend auf den ersten komprimierten Daten, um einen vierten Puffer zu erhalten, wobei der vierte Puffer erste Originaldaten umfasst, die durch Dekomprimieren der ersten komprimierten Daten erhalten werden, und der dritte Puffer ein Puffer ist, der einer Uplink-Datenkomprimierung (UDC) entspricht, wobei
der zweite Zeitpunkt später als der erste Zeitpunkt ist und der sechste Zeitpunkt später als der zweite Zeitpunkt ist;
wobei das Verfahren ferner Folgendes umfasst:
Empfangen (S701) erster Informationen zu einem vierten Zeitpunkt, wobei die ersten Informationen erste Anzeigeinformationen umfassen, die ersten Anzeigeinformationen angeben, dass die Empfangsvorrichtung den dritten Puffer aktualisiert, um den vierten Puffer zu erhalten, und der vierte Zeitpunkt später als der zweite Zeitpunkt ist;
wobei das Kommunikationsverfahren **dadurch gekennzeichnet ist, dass** die ersten Informationen ferner zweite Anzeigeinformationen umfassen, die zweiten Anzeigeinformationen zweite komprimierte Daten angeben und die zweiten komprimierten Daten basierend auf einem zweiten Puffer oder einem dritten Puffer erzeugt werden.

4. Kommunikationsvorrichtung (1000), die einen Prozessor (1001, 1005) und einen Speicher (1003) umfasst, wobei der Speicher mit dem Prozessor gekoppelt ist und der Prozessor dazu ausgelegt ist, das Verfahren nach Anspruch 1 oder Anspruch 2 oder das Verfahren nach Anspruch 3 durchzuführen.

5. Computerlesbares Speichermedium (1003), wobei das computerlesbare Speichermedium dazu ausgelegt ist, ein Computerprogramm zu speichern, und wenn das Computerprogramm durch eine Vorrichtung oder einen Chip in einer Vorrichtung ausgeführt wird, wird das Verfahren nach Anspruch 1 oder Anspruch 2 oder das Verfahren nach Anspruch 3 implementiert.

6. Computerprogrammprodukt, wobei das Computerprogrammprodukt ein Computerprogramm umfasst, und wenn das Computerprogramm durch eine Vorrichtung oder einen Chip in einer Vorrichtung ausgeführt wird, wird das Verfahren nach Anspruch 1 oder Anspruch 2 oder das Verfahren nach Anspruch 3 implementiert.

## Revendications

1. Procédé de communication, appliqué à un dispositif d'envoi ou à une puce dans un dispositif d'envoi, dans lequel le procédé comprend :
la compression (S301) de premières données d'origine en utilisant un premier tampon, pour obtenir des premières données compressées, dans lequel le premier tampon est un tampon correspondant à une technologie de compression de données de liaison montante, UDC ;
l'envoi (S302) des premières données compressées à un dispositif de réception à un premier moment ;
la réception (S303) de premières informations rétroactives en provenance du dispositif de réception à un deuxième moment, dans lequel les premières informations rétroactives indiquent que les premières données compressées sont reçues avec succès, et les premières informations rétroactives sont des informations rétroactives de couche physique ou des informations rétroactives de couche de contrôle d'accès au support, MAC ; et
la mise à jour (S304) du premier tampon à un troisième moment sur la base des premières données d'origine en réponse aux premières informations rétroactives, pour obtenir un deuxième tampon, dans lequel le deuxième tampon comprend les premières données d'origine, dans lequel
le deuxième moment est ultérieur au premier moment, et le troisième moment est ultérieur au deuxième moment ;
dans lequel le procédé comprend en outre :
l'envoi (S701) de premières informations à un quatrième moment, dans lequel les premières informations comprennent des premières informations d'indication, les premières informations d'indication indiquent au dispositif de réception de mettre à jour un troisième tampon pour obtenir un quatrième tampon, des données comprises dans le troisième tampon sont les mêmes que des données comprises dans le premier tampon, des données comprises dans le quatrième tampon sont les mêmes que des données comprises dans le deuxième tampon, et le quatrième moment est ultérieur au deuxième moment ;
le procédé de communication étant **caractérisé en ce que** les premières informations comprennent en outre des deuxièmes informations d'indication, les deuxièmes informations d'indication indiquent des deuxièmes données compressées, et les deuxièmes données compressées sont générées sur la base du premier tampon ou du deuxième tampon.

2. Procédé selon la revendication 1, dans lequel le procédé comprend en outre :
l'envoi de deuxièmes informations, dans lequel les deuxièmes informations indiquent une première durée, de telle sorte que le troisième moment est égal ou ultérieur à un moment obtenu en ajoutant la première durée au quatrième moment, ou le troisième moment est égal ou ultérieur à un moment obtenu en ajoutant la première durée au cinquième moment.

3. Procédé de communication, appliqué à un dispositif de réception ou à une puce dans un dispositif de réception, dans lequel le procédé comprend :
la réception (S302) de premières données compressées en provenance d'un dispositif d'envoi à un premier moment ;
l'envoi (S303) de premières informations rétroactives au dispositif d'envoi à un deuxième moment, dans lequel les premières informations rétroactives indiquent que les premières données compressées sont reçues avec succès, et les premières informations rétroactives sont des informations rétroactives de couche physique ou des informations rétroactives de couche de contrôle d'accès au support, MAC ; et
la mise à jour (S305) d'un troisième tampon à un sixième moment sur la base des premières données compressées, pour obtenir un quatrième tampon, dans lequel le quatrième tampon comprend les premières données d'origine obtenues en décompressant les premières données compressées, et le troisième tampon est un tampon correspondant à une compression de données de liaison montante, UDC, dans lequel
le deuxième moment est ultérieur au premier moment, et le sixième moment est ultérieur au deuxième moment ;
dans lequel le procédé comprend en outre :
la réception (S701) de premières informations à un quatrième moment, dans lequel les premières informations comprennent des premières informations d'indication, les premières informations d'indication indiquent au dispositif de réception de mettre à jour le troisième tampon pour obtenir le quatrième tampon, et le quatrième moment est ultérieur au deuxième moment ;
le procédé de communication étant **caractérisé en ce que** les premières informations comprennent en outre des deuxièmes informations d'indication, les deuxièmes informations d'indication indiquent des deuxièmes données compressées, et les deuxièmes données compressées sont générées sur la base d'un deuxième tampon ou d'un troisième tampon.

4. Appareil de communication (1000), comprenant un processeur (1001, 1005) et une mémoire (1003), dans lequel la mémoire est couplée au processeur, et le processeur est configuré pour réaliser le procédé selon la revendication 1 ou la revendication 2, ou le procédé selon la revendication 3.

5. Support de stockage lisible par ordinateur (1003), dans lequel le support de stockage lisible par ordinateur est configuré pour stocker un programme d'ordinateur, et, lorsque le programme d'ordinateur est exécuté par un dispositif ou une puce dans un dispositif, le procédé selon la revendication 1 ou la revendication 2 ou le procédé selon la revendication 3 est mis en œuvre.

6. Produit programme d'ordinateur, dans lequel le produit programme d'ordinateur comprend un programme d'ordinateur, et, lorsque le programme d'ordinateur est exécuté par un dispositif ou une puce dans un dispositif, le procédé selon la revendication 1 ou la revendication 2 ou le procédé selon la revendication 3 est mis en œuvre.
